(19) Europäisches Patentamt
European Patent Office
Office européen des brevets

(11) **EP 4 417 888 A1**

(12) **EUROPEAN PATENT APPLICATION**
published in accordance with Art. 153(4) EPC

(43) Date of publication:
**21.08.2024 Bulletin 2024/34**

(21) Application number: **21960542.5**

(22) Date of filing: **11.10.2021**

(51) International Patent Classification (IPC):
***F24F 11/62*** *(2018.01)*

(52) Cooperative Patent Classification (CPC):
**F24F 11/62;** Y02B 30/70

(86) International application number:
**PCT/JP2021/037576**

(87) International publication number:
**WO 2023/062681 (20.04.2023 Gazette 2023/16)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **MITSUBISHI ELECTRIC
CORPORATION
Chiyoda-ku
Tokyo 100-8310 (JP)**

(72) Inventor: **FAN, Yunqing
Tokyo 100-8310 (JP)**

(74) Representative: **Studio Torta S.p.A.
Via Viotti, 9
10121 Torino (IT)**

(54) **AIR CONDITIONING SYSTEM, INFORMATION PROCESSING DEVICE, AND AIR CONDITIONER CONTROL METHOD**

(57)    An air-conditioning system includes an air-conditioning apparatus, a ventilation apparatus, a detection unit configured to detect an environment state in an air-conditioning target space and a position and an activity state of a person present in the air-conditioning target space, a storage unit configured to store a plurality of control patterns, each being a combination of a plurality of air-sending patterns of the air-conditioning apparatus and a plurality of air-sending patterns of outside air by the ventilation apparatus, a fluid analyzing unit configured to calculate, for each of the control patterns, thermal environment distribution information and air age distribution information in the air-conditioning target space by using information of operation states and information of the environment state, a comfort level calculation unit configured to calculate, for each of the thermal environment distribution information, a local comfort level index from the position and the activity state of the person, and a determination unit configured to determine, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

FIG. 1

EP 4 417 888 A1

**Description**

Technical Field

The present disclosure relates to a an air-conditioning system having an air-conditioning apparatus and a ventilation apparatus as air-conditioning devices, to an information processing device connected to the air-conditioning devices, and to a method for controlling the air-conditioning devices.

Background Art

In recent years, demand for improving a comfort level in a space is increased. For air-conditioning apparatus, keeping thermal comfort for people staying in the room becomes more important. To achieve the comfortableness, a comfort level index called the predicted mean vote (PMV) was proposed. Meanwhile, there is increasing interest in controlling the air quality of a living space, such as keeping the concentration of carbon dioxide ($CO_2$) in the room within the allowable limit.

As indexes for evaluating the efficiency of indoor ventilation, air age, residual like time of air, and residence time of air are known (see, for example, Patent Literature 1). Patent Literature discloses a technique for analyzing a distribution of air age to analyze an air environment of a target space by using a dimensionless concentration distribution as an average arrival time of blown air to each measurement point, that is, an air age distribution. The dimensionless concentration distribution is obtained by normalizing the concentration at each point at the time of generation of indoor uniform tracers for tracing the flow of fluid, by an instantaneous uniform diffusion concentration.

Citation List

Patent Literature

Patent Literature 1: Japanese Patent Publication No. 4151780

Summary of Invention

Technical Problem

When an air-conditioning apparatus conditions air for the purpose of improving the comfort level of a person staying in the room, because the air quality is not considered while the temperature and the humidity are properly managed, the air-conditioning apparatus may keep an unhealthy environment for the person. Meanwhile, when the ventilation control disclosed in Patent Literature 1 is performed while placing a priority on the air quality, the indoor air is easily affected by outside air, and thus the comfort level of the person staying in the room may be reduced.

The present disclosure has been made to solve the above problems, and has an object to provide an air-conditioning system, an information processing device, and a method for controlling an air-conditioning device that improve the air quality and the comfort level for a user.

Solution to Problem

An air-conditioning system according to an embodiment of the present disclosure includes an air-conditioning apparatus configured to condition air in an air-conditioning target space ,a ventilation apparatus configured to supply outside air to the air-conditioning target space, a detection unit configured to detect an environment state including a temperature of air in the air-conditioning target space, and a position and an activity state of a person present in the air-conditioning target space, a storage unit configured to store a plurality of control patterns, each being a combination of a plurality of air-sending patterns of air blown out to the air-conditioning target space by the air-conditioning apparatus and a plurality of air-sending patterns of outside air supplied to the air-conditioning target space by the ventilation apparatus, a fluid analyzing unit configured to calculate, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus, and information of the environment state detected by the detection unit, a comfort level calculation unit configured to calculate, for each of the thermal environment distribution information, a local comfort level index indicating a comfort level of the person from the position and the activity state of the person detected by the detection unit, and a determination unit configured to determine, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

An information processing device according to an embodiment of the present disclosure is configured to be connected to an air-conditioning apparatus configured to condition air in an air-conditioning target space, a ventilation apparatus configured to supply outside air to the air-conditioning target space, and a detection unit configured to detect an environment state including a temperature of air in the air-conditioning target space and a position and an activity state of a person present in the air-conditioning target space. The information processing device includes a storage unit configured to store a plurality of control patterns, each being a combination of a plurality of air-sending patterns of air blown out to the air-conditioning target space by the air-conditioning apparatus and a plurality of air-sending patterns of the outside air supplied to the air-conditioning target space by the ventilation apparatus, and a controller configured to calculate, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus, and information of the environment state detected by the detection unit, calculate, for each of the thermal environment distribution information, a local comfort level index indicating a comfort level of the person from the position and the activity state of the person detected by the detection unit, and determine, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

A method for controlling an air-conditioning device according to an embodiment of the present disclosure is performed by an information processing device. The information processing device is configured to be connected to an air-conditioning apparatus configured to condition air in an air-conditioning target space, a ventilation apparatus configured to supply outside air to the air-conditioning target space, and a detection unit configured to detect an environment state including a temperature of air in the air-conditioning target space and a position and an activity state of a person present in the air-conditioning target space. The method includes storing a plurality of control patterns, the control patterns each being a combination of a plurality of air-sending patterns of air blown out to the air-conditioning target space by the air-conditioning apparatus and a plurality of air-sending patterns of the outside air supplied to the air-conditioning target space by the ventilation apparatus, calculating, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus, and information of the environment state detected by the detection unit, calculating, for each of the thermal environment distribution information, a local comfort level index indicating a comfort level of the person from the position and the activity state of the person detected by the detection unit, and determining, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

Advantageous Effects of Invention

According to an embodiment of the present disclosure, in accordance with the environment state of the air-conditioning target space, and the position and the activity state of a person present in the air-conditioning target space, a control pattern in which both the local conform level index and the air age for the person present in the air-conditioning target space satisfy the standards is determined from among the plurality of the control patterns. As a result, when the air-conditioning apparatus and the ventilation apparatus are operated in accordance with the control pattern in which both the local conform level index and the air age satisfy the standards, both health and comfort level of the person present in the air-conditioning target space can be maintained.

Brief Description of Drawings

[Fig. 1] Fig. 1 is a diagram illustrating an example of the configuration of an air-conditioning system according to Embodiment 1.
[Fig. 2] Fig. 2 is a diagram illustrating an installation example of an air-conditioning apparatus and a ventilation apparatus shown in Fig. 1.
[Fig. 3] Fig. 3 is a refrigerant circuit diagram illustrating an example of the configuration of the air-conditioning apparatus shown in Fig. 1.
[Fig. 4] Fig. 4 is an external perspective view illustrating an example of a load-side unit shown in Fig. 2.

[Fig. 5] Fig. 5 is a perspective view schematically illustrating the configuration of the load-side unit shown in Fig. 4, viewed from the side.

[Fig. 6] Fig. 6 is a schematic view illustrating a relationship between the angle of a first flap shown in Fig. 5 and the air blow direction.

[Fig. 7] Fig. 7 is a schematic view illustrating a relationship between the angle of a second flap shown in Fig. 5 and the air blow direction.

[Fig. 8] Fig. 8 is a diagram illustrating an example of a range of inclination angle with the direction of gravity as reference for detecting a distribution of temperature by an infrared sensor shown in Fig. 3.

[Fig. 9] Fig. 9 is a diagram illustrating an example of a range in the horizontal direction of a distribution of temperature detected by the infrared sensor shown in Fig. 3.

[Fig. 10] Fig. 10 is an image diagram illustrating an example of a thermal image representing a distribution of temperature detected by the infrared sensor shown in Fig. 3.

[Fig. 11] Fig. 11 is a functional block diagram illustrating an example of the configuration of a controller shown in Fig. 3.

[Fig. 12] Fig. 12 is a hardware configuration diagram illustrating an example of the configuration of the controller shown in Fig. 11.

[Fig. 13] Fig. 13 is a hardware configuration diagram illustrating another example of the configuration of the controller shown in Fig. 11.

[Fig. 14] Fig. 14 is a block diagram illustrating an example of the configuration of the ventilation apparatus shown in Fig. 1.

[Fig. 15] Fig. 15 is a block diagram illustrating an example of the configuration of an information processing device shown in Fig. 1.

[Fig. 16] Fig. 16 is a table illustrating an example of a plurality of control patterns stored in a storage device shown in Fig. 15.

[Fig. 17] Fig. 17 is a table illustrating a relationship between the control patterns shown in Fig. 16 and boundary conditions.

[Fig. 18] Fig. 18 is a top view illustrating an example of a simulation of a temperature distribution in an air-conditioning target space by a fluid analyzing unit shown in Fig. 15.

[Fig. 19] Fig. 19 is a side view illustrating an example of the temperature distribution shown in Fig. 18.

[Fig. 20] Fig. 20 is a table illustrating examples of activities and energy metabolic rates representing the amounts of the activities.

[Fig. 21] Fig. 21 is an image diagram illustrating an example of positions of multiple people detected by a person determination unit shown in Fig. 15.

[Fig. 22] Fig. 22 is an example of a table that is stored in the storage device and contains the positions and the activity amounts of the multiple people determined by the person determination unit shown in Fig. 15.

[Fig. 23] Fig. 23 is a diagram schematically indicating that, in the room shown in Fig. 2, outside air is supplied from the ventilation device and the age of air varies depending on the location.

[Fig. 24] Fig. 24 is a schematic diagram illustrating a procedure of information processing by the information processing device according to Embodiment 1.

[Fig. 25] Fig. 25 is a flowchart illustrating an operation procedure of the information processing device according to Embodiment 1.

[Fig. 26] Fig. 26 is a flowchart illustrating an operation procedure of the information processing device according to Embodiment 1.

[Fig. 27] Fig. 27 is an example of a table recorded in the storage device in step S110 shown in Fig. 26.

[Fig. 28] Fig. 28 is an example of a table recorded in the storage device in step S115 shown in Fig. 25.

[Fig. 29] Fig. 29 is a block diagram illustrating an example of the configuration of the air-conditioning apparatus in the air-conditioning system according to Embodiment 2.

[Fig. 30] Fig. 30 is a block diagram illustrating an example of the configuration of the information processing device in the air-conditioning system according to Embodiment 2.

[Fig. 31] Fig. 31 is a block diagram illustrating an example of the configuration of the information processing device in the air-conditioning system according to Embodiment 3.

[Fig. 32] Fig. 32 is a flowchart illustrating an operation procedure of the information processing device according to Embodiment 3.

[Fig. 33] Fig. 33 is a diagram schematically illustrating a procedure of an inverse analysis processing of step S205 in Fig. 32.

[Fig. 34] Fig. 34 is a table illustrating an example of sensitivity information recorded in the inverse analysis processing of step S205 in Fig. 32.

[Fig. 35] Fig. 35 is a diagram illustrating an example of the configuration of the air-conditioning system of Modification Example 1.

Description of Embodiments

Embodiments of the present disclosure will be described in detail with reference to the drawings. Various specific configurations described in the present embodiments are only examples, and the present disclosure is not limited to the configuration examples described herein. In the embodiments of the present disclosure, communication includes a wireless communication and/or a wired communication. In the present embodiments, the communication may be a communication system using both a wireless communication and a wired communication. The communication system may be configured so that, for example, a wireless communication is used in one section and a wired communication is used in another space. In addition, the communication system may be configured so that a wired communication is used in communication from one device to another device and a wireless communication is used in communication from the another device to the one device.

Embodiment 1

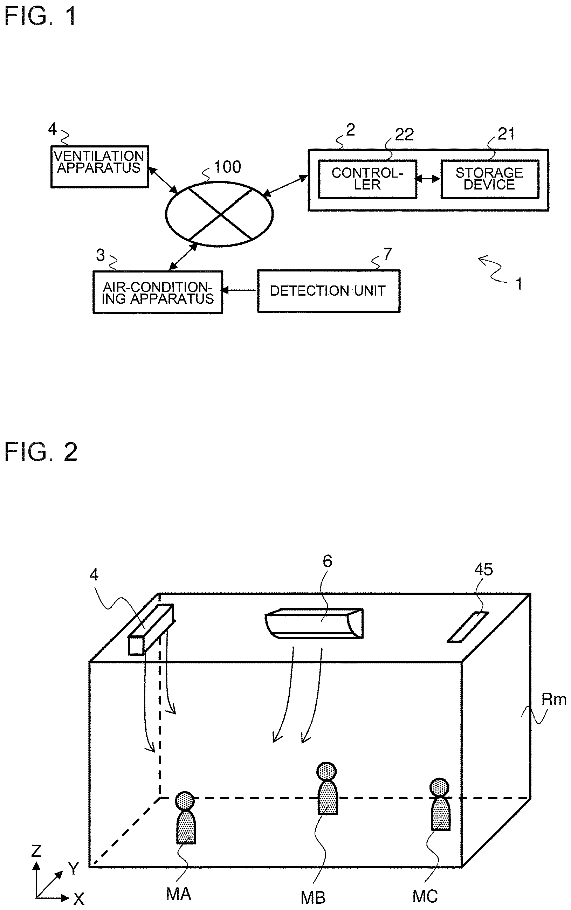

The configuration of an air-conditioning system 1 according to Embodiment 1 will be described. Fig. 1 is a diagram illustrating an example of the configuration of the air-conditioning system according to Embodiment 1. As shown in Fig. 1, the air-conditioning system 1 includes an air-conditioning apparatus 3 configured to condition air in a room, which is an air-conditioning target space, a ventilation apparatus 4 configured to supply outside air to the room, a detection unit 7, and an information processing device 2. In the configuration example shown in Fig. 1, the detection unit 7 is connected to the air-conditioning apparatus 3.

The air-conditioning apparatus 3 and the ventilation apparatus 4 are connected to the information processing device 2 via a network 100. The network 100 may be the Internet, for example. Although Fig. 1 shows the configuration in which the detection unit 7 is indirectly connected to the network 100 via the air-conditioning apparatus 3, the detection unit 7 may be directly connected to the network 100. In this case, the detection unit 7 may be provided with a communication means (not shown) for communicating with the information processing device 2 via the network 100.

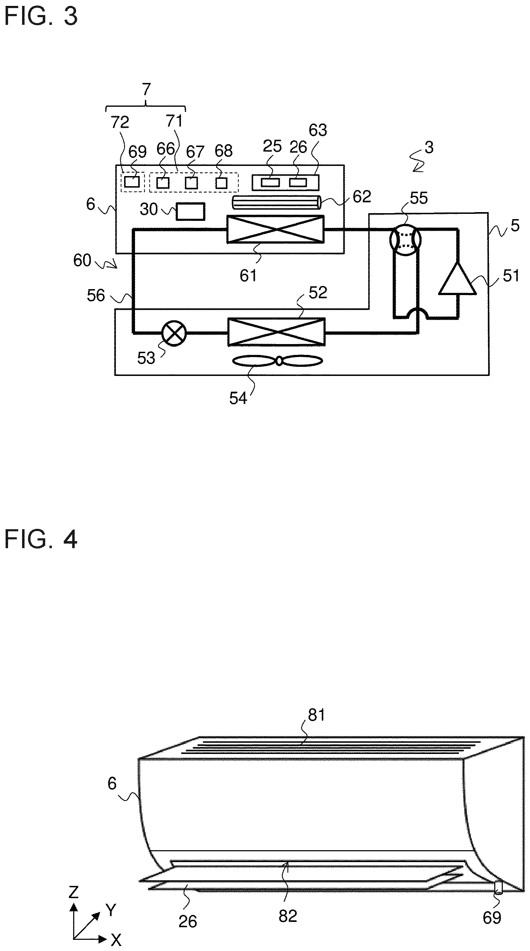

Fig. 2 is a diagram illustrating an installation example of the air-conditioning apparatus and the ventilation apparatus shown in Fig. 1. Fig. 3 is a refrigerant circuit diagram illustrating an example of the configuration of the air-conditioning apparatus shown in Fig. 1. As shown in Fig. 3, the air-conditioning apparatus 3 includes a heat-source-side unit 5 configured to provide a heat source and a load-side unit 6 configured to condition air in the room by using the heat source provided by the heat-source-side unit 5.

As shown in Fig. 2, the load-side unit 6 shown in Fig. 3 is mounted on a wall of a room Rm. In Fig. 2, the heat-source-side unit 5 shown in Fig. 3 is omitted. As shown in Fig. 2, the ventilation apparatus 4 is installed on the ceiling of the room Rm. The ventilation apparatus 4 is supplied with outside air via a duct (not shown). Although the room Rm shown in Fig. 2 is provided with an exhaust port 45, the exhaust port 45 is not necessarily required. This is because, even when the exhaust port 45 is not provided, air in the room is spontaneously discharged through a gap of a door (not shown) or a similar opening when outside air is supplied to the room Rm. Although Fig. 2 shows a case where three users MA to MC are present in the room Rm as an example of the case where people is present in the room Rm, the number of people is not limited to three. In addition, the positions of the three people are not limited to those shown in Fig. 2.

Next, the configuration of the air-conditioning apparatus 3 will be described with reference to Fig. 3. The heat-source-side unit 5 includes a compressor 51, a heat-source-side heat exchanger 52, an expansion valve 53, an outdoor fan 54, and a four-way valve 55. The load-side unit 6 includes a load-side heat exchanger 61, an indoor fan 62, an airflow direction adjusting unit 63, and a controller 30.

The airflow direction adjusting unit 63 includes a first flap 25 and a second flap 26, each configured to adjust a blow direction of air blown out from the load-side unit 6. The load-side unit 6 is provided with the detection unit 7. The detection unit 7 includes an environment state detection unit 71 and a person detection unit 72. The environment state detection unit 71 includes a room temperature sensor 66 configured to detect a room temperature Tr, a humidity sensor 67 configured to detect a humidity Hr of air in the room, and a temperature sensor 68 configured to detect a temperature Ta of air blown out to the room from the load-side unit 6. The load-side unit 6 is provided with an infrared sensor 69 configured to detect a temperature distribution in the indoor space. The infrared sensor 69 functions as the person detection unit 72.

The compressor 51, the heat-source-side heat exchanger 52, the expansion valve 53, and the load-side heat exchanger 61 are connected by a refrigerant pipe 56 to form a refrigerant circuit 60 in which refrigerant circulates. The compressor 51, the expansion valve 53, the outdoor fan 54, the indoor fan 62, the four-way valve 55, and the airflow direction adjusting unit 63 are connected to the controller 30 for communication. The detection unit 7 is connected to the controller 30 for communication.

The compressor 51 is configured to compress sucked refrigerant and then discharge the refrigerant therefrom. The compressor 51 is, for example, an inverter compressor capable of changing the capacity by adjusting the operation frequency. The four-way valve 55 is configured to change a flow direction of the refrigerant flowing in the refrigerant circuit 60. The expansion valve 53 is configured to expand the refrigerant by reducing the pressure thereof. The expansion valve 53 is, for example, an electronic expansion valve. The heat-source-side heat exchanger 52 is a heat exchanger that exchanges heat between the refrigerant and outside air. The load-side heat exchanger 61 is a heat exchanger that exchanges heat between the refrigerant and indoor air. The heat-source-side heat exchanger 52 and the load-side heat exchanger 61 are, for example, plate-fin type heat exchangers. The outdoor fan 54 is, for example, a propeller fan. The indoor fan 62 is, for example, a cross flow fan.

A heat pump circuit is formed when the refrigerant circulates through the refrigerant circuit 60 while the refrigerant is repeatedly compressed and expanded. The load-side unit 6 conditions indoor air by performing an operation, such as cooling, heating, dehumidification, humidification, moisture holding, or ventilation. Although Fig. 3 indicates that the controller 30 is provided at the load-side unit 6, the installation position of the controller 30 is not limited to the load-side unit 6. The controller 30 may be installed at the heat-source-side unit 5, or may be installed at a position other than the load-side unit 6 and the heat-source-side unit 5. In addition, a temperature sensor (not shown) configured to detect a condensing temperature and an evaporating temperature may be installed at the air-conditioning apparatus 3.

Fig. 4 is an external perspective view illustrating an example of the load-side unit shown in Fig. 2. The load-side unit 6 is provided with an air inlet 81 at an upper part thereof to take in air from the room. The load-side unit 6 is provided with an air outlet 82 at a lower part thereof to blow out air, the heat of which has been exchanged with the refrigerant in the load-side heat exchanger 61, into the room.

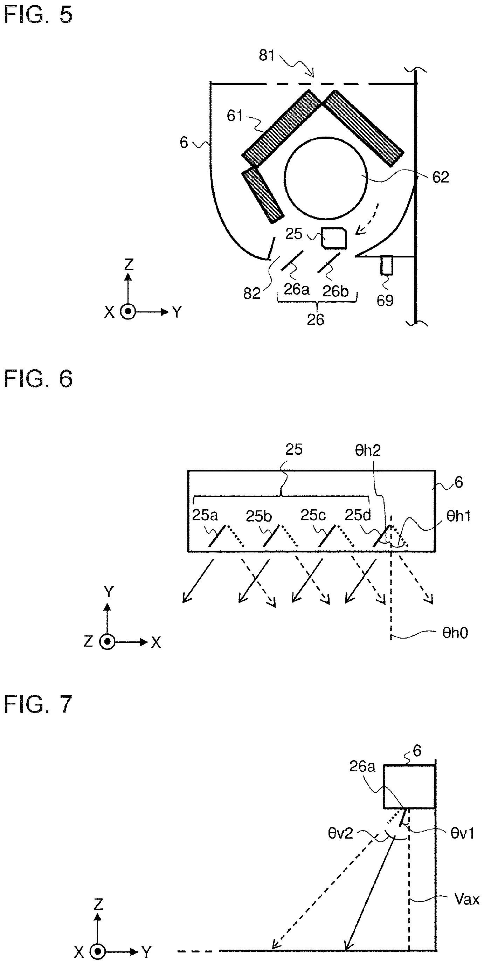

Fig. 5 is a perspective view schematically illustrating the configuration of the load-side unit shown in Fig. 4, viewed from the side. When the indoor fan 62 rotates, a stream of air flowing in the direction indicated by a broken line arrow is formed in the load-side unit 6, and the air is blown out to the room via the air outlet 82. The air outlet 82 is provided with the first flap 25 and the second flap 26 configured to adjust the flow directions of the air blown out from the air outlet 82. The second flap 26 includes a front wing 26a and a back wing 26b.

The first flap 25 shown in Fig. 5 will be described. Fig. 6 is a schematic view illustrating a relationship between the angle of the first flap shown in Fig. 5 and the air blow direction. As shown in Fig. 6, the first flap 25 includes wings 25a to 25d. In Fig. 6, for easy understanding of the configuration, the wings 25a to 25d, which actually cannot be observed directly, are indicated as viewed through the load-side unit 6 from the top. The angle of each of the wings 25a to 25d of the first flap 25 is indicated as $\theta h$ with a front direction (opposite direction of X-axis arrow) of the load-side unit 6 as a horizontal reference $\theta h0 = 0$ degrees. In Fig. 6, the air blow directions when the angle is at $\theta h1$ are indicated by broken line arrows, and the air blow directions when the angle is at $\theta h2$ are indicated by solid line arrows.

The second flap 26 shown in Fig. 5 will be described. Fig. 7 is a schematic view illustrating a relationship between the angle of the second flap shown in Fig. 5 and the air blow direction. For easy understanding of the airflow adjustment function of the second flap 26, Fig. 7 shows only the front wing 26a of the second flap 26 shown in Fig. 5 and does not show the back wing 26b. With the gravity direction (opposite direction of Z-axis arrow) of the load-side unit 6 as a vertical reference Vax, the angle of the front wing 26a is indicated as $\theta v$. In Fig. 7, the air blow direction when the angle is at $\theta v1$ is indicated by a solid line arrow, and the air blow direction when the angle is at $\theta v2$ is indicated by a broken line arrow.

Note that, although, in Embodiment 1, a case where the load-side unit 6 is of a wall mounting type is described, the load-side unit 6 may be of another type, such as a type embedded in the ceiling, or type attached to the room side surface of the ceiling.

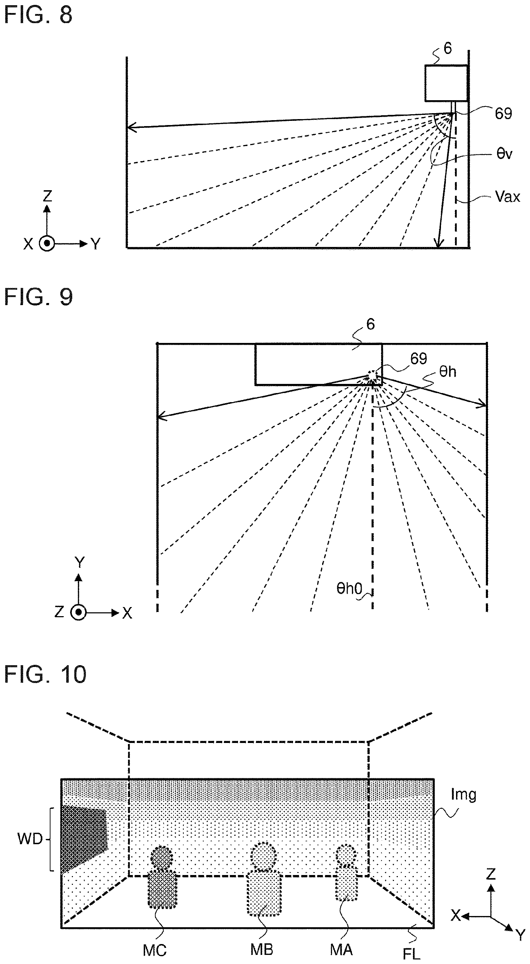

The infrared sensor 69 shown in Fig. 3 will be described. Fig. 8 is a diagram illustrating an example of a range of inclination angle with the direction of gravity as reference for detecting a distribution of temperature by the infrared sensor shown in Fig. 3. As with Fig. 7, the inclination angle with the vertical reference Vax as a reference is indicated as $\theta v$. Fig. 9 is a diagram illustrating an example of a range in the horizontal direction of a distribution of temperature detected by the infrared sensor shown in Fig. 3. As with Fig. 6, the angle in the horizontal direction with the horizontal reference $\theta h0$ as a reference is indicated as $\theta h$. As shown in Figs. 8 and 9, the infrared sensor 69 is configured to measure a distribution of temperature by heat emission in the room in a certain range defined by the inclination angle $\theta v$ and in a certain range defined by the angle $\theta h$ with respect to the direction of a wall (opposite direction of Y-axis arrow) that the load-side unit 6 faces.

Fig. 10 is an image diagram illustrating an example of a thermal image representing a distribution of temperature detected by the infrared sensor shown in Fig. 3. In Fig. 10, boundaries between walls and boundaries between a wall and the floor or the ceiling are indicated by broken lines. In general, because a wall, a floor, and a ceiling are made of different materials having different heat conductivities, the temperatures of the wall, the floor, and the ceiling are different from each other in a thermal image indicating a temperature distribution, and thus their boundaries can be detected. The infrared sensor 69 is configured to transmit thermal image data indicating a temperature distribution based on a heat emission state in the air-conditioning target space, to the controller 30.

In the thermal image Img shown in Fig. 10, differences in temperature are expressed by differences in dot density. In an actual thermal image, differences in temperature are expressed by different colors. When the colors are expressed in RGB, a temperature distribution is represented by using RGB values. When a person is present the room, the person present in the room has a body surface temperature that is different from the temperatures of a floor FL and walls. Therefore, by analyzing the thermal image Img shown in Fig. 10, the position of the person can be obtained. This determination process will be described with reference to Figs. 8 to 10. The thermal image Img shown in Fig. 10 shows a case where the three users MA to MC are detected. The position of the floor FL in the room is represented in two-dimensional XY coordinates by X-axis and Y-axis. In addition, suppose that the height of the infrared sensor 69 above the floor FL or the distance from the infrared sensor 69 to the wall that the infrared sensor 69 faces is measured in advance. In this case, the position coordinates of each of the users MA to MC are calculated by applying the measured height or distance and the Pythagorean theorem to the inclination angle θv and the angle θh of the user.

Furthermore, in the thermal image Img shown in Fig. 10, temperature is different depending on the density of dot pattern. Thus, by analyzing the thermal image Img and comparing the surface temperatures of the users MA to MC, an activity state of each user can be determined, and thus the amount of activity can be estimated. In a case of the thermal image Img shown in Fig. 10, because the density of dot pattern of the user MA and that of the user MB are the same, it can be estimated that the amount of activity of the user MA and that of the MB are equivalent. In the thermal image, the activity state of a person, such as standing or sitting, can be determined from the shape of an object determined as the person. In addition, in the thermal image Img shown in Fig. 10, when higher density of dot pattern indicates higher temperature, it can be estimated that the amount of activity of the user MC is larger than those of the users MA and MB. Furthermore, in the thermal image Img shown in Fig. 10, when higher density of dot pattern indicates higher temperature, it can be estimated that a heat load around a window WD is large because the temperature around the window WD is high.

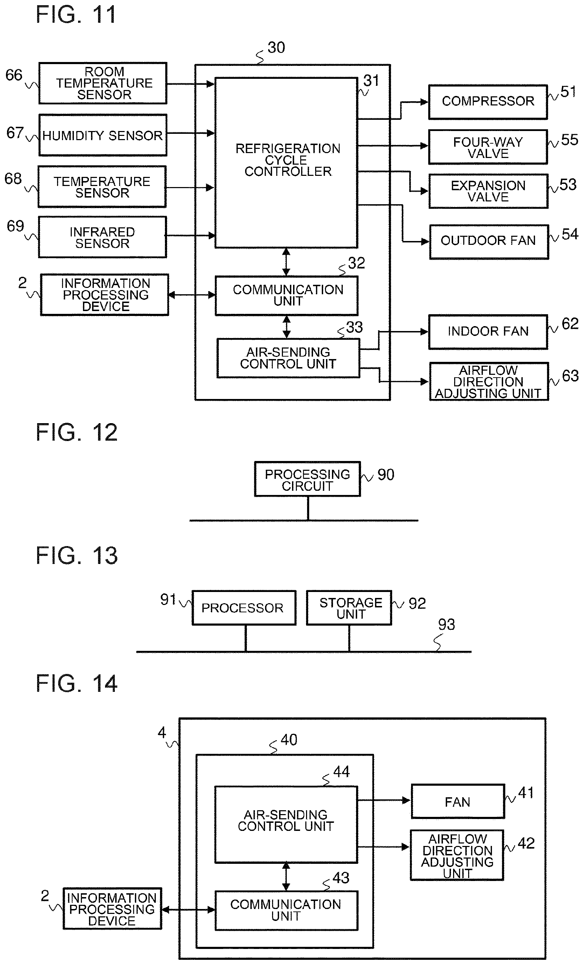

Next, the controller 30 shown in Fig. 3 will be described. Fig. 11 is a functional block diagram illustrating an example of the configuration of the controller shown in Fig. 3. The controller 30 is, for example, a microcomputer. The controller 30 includes a refrigeration cycle controller 31, a communication unit 32, and an air-sending control unit 33.

The communication unit 32 is configured to transmit and receive information to/from the information processing device 2 according to, for example, the Transmission Control Protocol/Internet Protocol (TCP/IP). The communication unit 32 is configured to transmit thermal image data, information of operation states, and information of environment states to the information processing device 2 at pre-determined fixed intervals T. The information of operation states includes information of an air volume AF and an airflow direction AD, and a temperature Ta set in the load-side unit 6. The information of environment states includes information of the room temperature Tr detected by the room temperature sensor 66 and information of the humidity Hr detected by the humidity sensor 67. Information of the temperature Ta, information of environment states, and image data are provided to the communication unit 32 from the refrigeration cycle controller 31. Information of the air volume AF and the airflow direction AD set in the load-side unit 6 is provided to the communication unit 32 from the air-sending control unit 33.

The communication unit 32 is configured to, when the communication unit 32 receives a control pattern from the information processing device 2, extract information of the air volume AF, the airflow direction AD, and the temperature TA. The communication unit 32 is configured to transmit the information of the air volume AF and the airflow direction AD to the air-sending control unit 33. The communication unit 32 is configured to transmit the information of the temperature TA to the refrigeration cycle controller 31.

The refrigeration cycle controller 31 is configured to transmit information of the temperature Ta detected by the temperature sensor 68, information of environment states, and thermal image data detected by the infrared sensor 69 to the communication unit 32 at fixed intervals T. The refrigeration cycle controller 31 is configured to, when the refrigeration cycle controller 31 receives information of the temperature TA from the communication unit 32, control the operation frequency of the compressor 51, the rotation speed of the outdoor fan 54, and the opening degree of the expansion valve 53 so that the temperature Ta detected by the temperature sensor 68 reaches the temperature TA.

The air-sending control unit 33 is configured to, when the air-sending control unit 33 receives information of the air volume AF from the communication unit 32, control the rotation speed of the indoor fan 62 so that the volume of air blown out from the air outlet 82 reaches the air volume AF. The air-sending control unit 33 is configured to, when the air-sending control unit 33 receives information of the airflow direction AD from the communication unit 32, control the angles θv and θh of an airflow direction adjusting unit 42 such that air blown out from the air outlet 82 flows in the airflow direction AD. In the air-conditioning apparatus 3, air-sending patterns are set by using combinations of the air volume AF, the airflow direction AD, and the temperature TA for the air to be supplied to the room from the load-side unit 6.

Now, one example of hardware of the controller 30 shown in Fig. 11 will be described. Fig. 12 is a hardware configuration diagram illustrating an example of the configuration of the controller shown in Fig. 11. When various functions of the controller 30 are executed by hardware, the controller 30 shown in Fig. 11 is a processing circuit 90, as shown in Fig. 12. Each of the functions of the refrigeration cycle controller 31, the communication unit 32, and the air-sending control unit 33 shown in Fig. 11 is achieved by the processing circuit 90.

When each of the functions is executed by hardware, the processing circuit 90 corresponds to, for example, a single circuit, a composite circuit, a programmed processor, a parallel-programmed processor, an application specific integrated circuit (ASIC), a field-programmable gate array (FPGA), or a combination of those circuits. The functions of the refrigeration cycle controller 31, the communication unit 32, and the air-sending control unit 33 may be achieved by respective processing circuits 90. Alternatively, the functions of the refrigeration cycle controller 31, the communication unit 32, and the air-sending control unit 33 may be achieved by a single processing circuit 90.

Furthermore, another example of the hardware of the controller 30 shown in Fig. 11 will be described. Fig. 13 is a hardware configuration diagram illustrating another example of the configuration of the controller shown in Fig. 11. When various functions of the controller 30 are executed by software, the controller 30 shown in Fig. 11 is formed as a processor 91, such as a central processing unit (CPU), and a storage unit 92, as shown in Fig. 13. Each of the functions of the refrigeration cycle controller 31, the communication unit 32, and the air-sending control unit 33 is achieved by the processor 91 and the storage unit 92. Fig. 13 indicates that the processor 91 and the storage unit 92 are connected to each other via a bus 93 so that they can communicate with each other.

When each of the functions is executed by software, the functions of the refrigeration cycle controller 31, the communication unit 32, and the air-sending control unit 33 are achieved by software, firmware, or a combination of software and firmware. The software or the firmware is described as a program and is stored in the storage unit 92. The processor 91 is configured to read out and execute the program stored in the storage unit 92, to thereby achieve the function of each unit.

As the storage unit 92, a read only storage unit (ROM), a flash storage unit, an erasable and programmable ROM (EPROM), an electrically erasable and programmable ROM (EEPROM), or another non-volatile semiconductor storage unit is used, for example. In addition, as the storage unit 92, a volatile semiconductor storage unit, such as a random access storage unit (RAM), may be used. Furthermore, as the storage unit 92, a detachable recording medium, such as a magnetic disk, a flexible disk, an optical disc, a compact disc (CD), a mini disc (MD), or a digital versatile disc (DVD), may be used.

Next, the configuration of the ventilation apparatus 4 shown in Fig. 1 will be described. Fig. 14 is a block diagram illustrating an example of the configuration of the ventilation apparatus shown in Fig. 1. The ventilation apparatus 4 includes a fan 41, an airflow direction adjusting unit 42, and a controller 40 configured to control the fan 41 and the airflow direction adjusting unit 42. The controller 40 includes a communication unit 43 configured to transmit and receive information to/from the information processing device 2 and an air-sending control unit 44 configured to control the fan 41 and the airflow direction adjusting unit 42. The fan 41 is, for example, a cross flow fan. The airflow direction adjusting unit 42 has a similar configuration to that of the airflow direction adjusting unit 63, which has been described above with reference to Figs. 5 to 7, and thus a detailed description thereof will be omitted here.

The communication unit 43 is configured to transmit information of operation states to the information processing device 2 at pre-determined fixed intervals T. The information of operation states includes information of an air volume VF and an airflow direction VD set in the ventilation apparatus 4. Information of the air volume VF and the airflow direction VD set in the ventilation apparatus 4 is provided to the communication unit 43 from the air-sending control unit 44. The communication unit 43 is configured to, when the communication unit 43 receives a control pattern from the information processing device 2, extract information of the air volume VF and the airflow direction VD. The communication unit 43 is configured to transmit the information of the air volume VF and the airflow direction VD to the air-sending control unit 33. The communication unit 43 is configured to transmit and receive information to/from the information processing device 2 by using, for example, the TCP/IP protocol.

The air-sending control unit 44 is configured to, when the air-sending control unit 44 receives information of the air volume VF from the communication unit 43, control the rotation speed of the fan 41 such that the volume of outside air blow out to the room from an air outlet (not shown) reaches the air volume VF. The air-sending control unit 44 is configured to, when the air-sending control unit 44 receives information of the airflow direction VD from the communication unit 43, control angles $\theta h$ and $\theta v$ of the airflow direction adjusting unit 42 such that outside air blown out from the air outlet (not shown) flows in the airflow direction VD. In the ventilation apparatus 4, an air-sending pattern is set by using a combination of the air volume VF and the airflow direction VD for the outside air to be supplied to the room from the ventilation apparatus 4.

Note that, because a hardware configuration example of the controller 40 shown in Fig. 14 is the same as the configuration described with reference to Figs. 12 and 13, a detailed description thereof will be omitted.

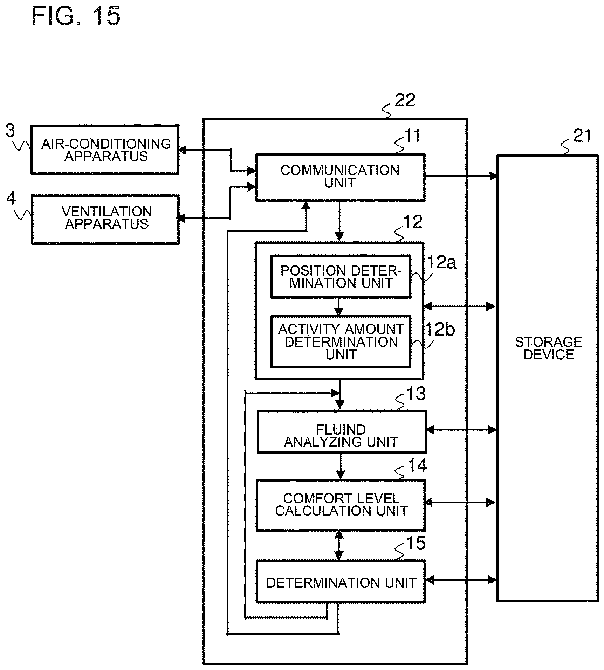

Next, the configuration of the information processing device 2 shown in Fig. 1 will be described. Fig. 15 is a block diagram illustrating an example of the configuration of the information processing device shown in Fig. 1. The information processing device 2 is configured to determine a control pattern to be executed by the air-conditioning apparatus 3 and the ventilation apparatus 4, by using a comfort level index and an air age. The information processing device 2 is, for example, a server. As shown in Fig. 1, the information processing device 2 includes a storage device 21 and a control device 22. The air age is denoted as AOA (Age Of Air) or Air Age.

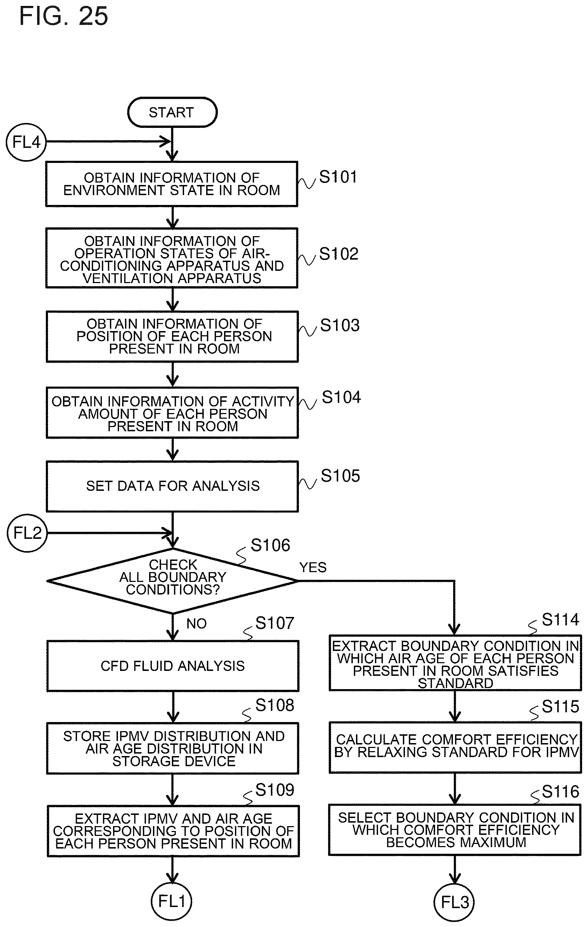

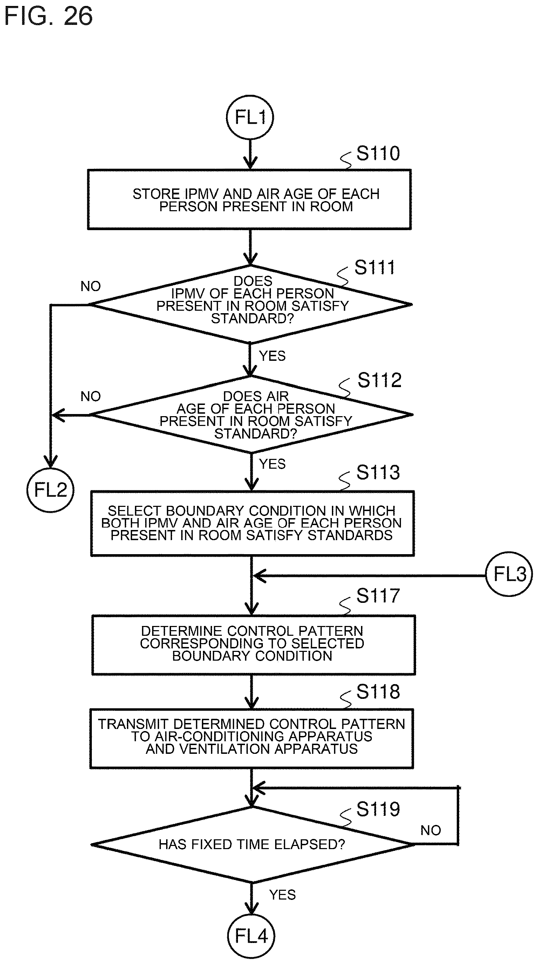

The storage device 21 is, for example, a hard disk drive (HDD). The control device 22 is, for example, a microcomputer. Various functions of the control device 22 are achieved by executing software by an arithmetic circuit, such as a microcomputer. In the software, a procedure shown in the flowchart (Figs. 25 and 26), which will be described later, is written.

As shown in Fig. 15, the control device 22 includes a communication unit 11, a person determination unit 12, a fluid analyzing unit 13, a comfort level calculation unit 14, and a determination unit 15. The person determination unit 12 includes a position determination unit 12a and an activity amount determination unit 12b.

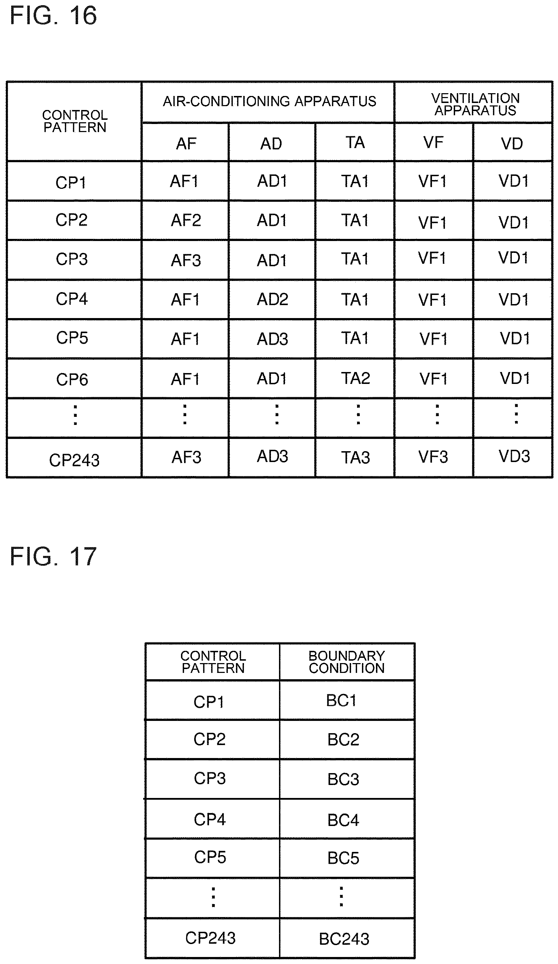

Next, information that the storage device 21 stores will be described. Fig. 16 is a table illustrating an example of a plurality of control patterns stored in the storage device shown in Fig. 15. Fig. 17 is a table illustrating a relationship between the control patterns shown in Fig. 16 and boundary conditions.

Fig. 16 indicates that, for the air-conditioning apparatus 3, the air volume AF of the indoor fan 62 in the load-side unit 6 can be changed in three levels, air volume AF1 to air volume AF3. Fig. 16 indicates that the airflow direction AD of the airflow direction adjusting unit 63 in the load-side unit 6 can be changed in three levels, airflow direction AD1 to airflow direction AD3. Fig. 16 indicates that the temperature TA set for the air blown out from the load-side unit 6 can be changed in three levels, temperature TA1 to temperature TA3. In the example shown in Fig. 6, there are 3 × 3 × 3 = 27 patterns for the air-sending pattern of the load-side unit 6.

Fig. 16 indicates that, for the ventilation apparatus 4, the air volume VF of the fan 41 can be changed in three levels, air volume VF1 to air volume VF3. Fig. 16 indicates that the airflow direction VD of the airflow direction adjusting unit 42 can be changed in three levels, airflow direction VD1 to airflow direction VD3. In the example shown in Fig. 6, there are 3 × 3 = 9 patterns for the air-sending pattern of the ventilation apparatus 4.

In the example shown in Fig. 16, control patterns for the air-sending patterns of the air-conditioning apparatus 3 and the ventilation apparatus 4 include combinations of 27 air-sending patterns of the load-side unit 6 and 9 air-sending patterns of the ventilation apparatus 4. Thus, there are 27 × 9 = 243 control patterns. When the total number of control patterns is represented as n (n is a positive integer), a case where n = 243 is described in Embodiment 1. When j is any integer from 1 to 243, the identifier of each control pattern is represented as CPj. Because the control patterns become boundary conditions for air-sending in the CFD fluid analysis, the identifiers of the control patterns correspond to the identifiers of the boundary conditions, as shown in Fig. 17 With this configuration, a boundary condition database is formed in the storage device 21.

Note that, although Embodiment 1 is described by using a case where the control parameters, such as air volume and airflow direction, can be selected from three levels, as shown in Fig. 16, the number of levels for each control parameter is not limited to three.

Next, the configuration of each unit of the control device 22 will be described. The communication unit 11 is configured to, when the communication unit 11 receives information of operation states from the air-conditioning apparatus 3 and the ventilation apparatus 4, record, in the storage device 21, the operation states as a control pattern CPc being executed, which is the currently set the control pattern. In addition, the communication unit 11 is configured to, when the communication unit 11 receives a control pattern to be set in the air-conditioning apparatus 3 and the ventilation apparatus 4 from determination unit 15, transmit the received control pattern to the air-conditioning apparatus 3 and the ventilation apparatus 4. The communication unit 11 is configured to transmit and receive information to/from the air-conditioning apparatus 3 and the ventilation apparatus 4 by using the TCP/IP protocol.

Next, the fluid analyzing unit 13 will be described. The fluid analyzing unit 13 is configured to simulate a temperature distribution in the air-conditioning target space for each control pattern by using a computational fluid dynamics (CFD), which is an example of numerical fluid analysis, and estimate a thermal environment distribution including a temperature distribution in the air-conditioning target space and an air age distribution, which is a distribution of air age that serves as an index indicating freshness of air. More specifically, the fluid analyzing unit 13 is configured to perform a numerical fluid analysis on the boundary conditions in order in the boundary condition database described with reference to Figs. 16 and 17, to calculate a temperature distribution, a humidity distribution, an airflow speed distribution, and a radiant heat distribution. The fluid analyzing unit 13 is configured to then obtain thermal environment distribution information including the temperature distribution, the humidity distribution, the airflow speed distribution, and the radiant heat distribution, and air age distribution information.

One example of calculation processing of the CFD according to Embodiment 1 will be explained. The fluid analyzing unit 13 creates a three-dimensional model for an air-conditioning target space to be a target of simulation by using a standard three-dimensional fluid model. Next, the fluid analyzing unit 13 divides the modeled air-conditioning target space into a plurality of grid-like areas. Then, fluid analyzing unit 13 applies an initial requisite as a boundary condition to a result of heat calculation, which corresponds to a pressure, a temperature, and a velocity of fluid, a heat generating body in the space, and an intrusion heat from walls, for each rectangular area formed between grid lines. Furthermore, the fluid analyzing unit 13 uses a pre-determined turbulence model and a pre-determined difference scheme to analyze the pressure, the air volume, and the temperature in each rectangular area based on boundary conditions, such as intrusion heat from walls and internal heat generation.

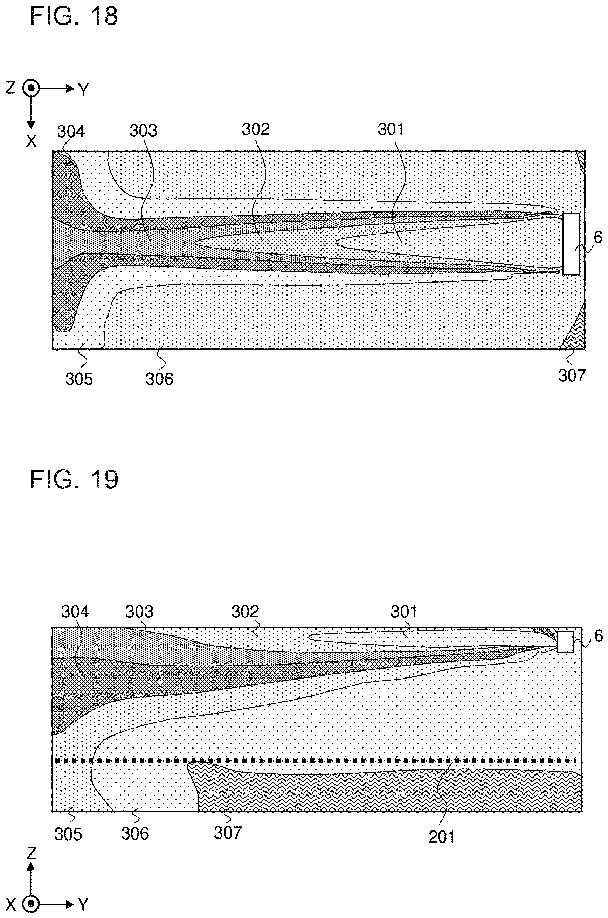

Fig. 18 is a top view illustrating an example of a simulation of a temperature distribution in the air-conditioning target space by the fluid analyzing unit shown in Fig. 15. Fig. 19 is a side view illustrating an example of the temperature distribution shown in Fig. 18. Figs. 18 and 19 shows a case where the air-conditioning apparatus 3 performs a cooling operation.

Figs. 18 and 19 show a relationship of temperatures of air layers 301 to 307, and indicate that the temperature of the air layer 301 < the temperature of the air layer 302 < the temperature of the air layer 303 < ⋯ < the temperature of the air layer 307. In Fig. 19, the temperature distribution on the XY coordinate plane at a person's height shown by a broken line 201 viewed in the Z-axis direction is the most influential range for the activity of a person. Fig. 19 shows that it is only necessary to focus on the thermal fluid analysis and the air age on the XY coordinate plane corresponding to the person's height, among the CFD fluid analysis results obtained by the fluid analyzing unit 13.

Next, before explaining the configuration of the person determination unit 12 shown in Fig. 15, a comfort level index that is used when the information processing device 2 determines a control pattern to be executed by the air-conditioning apparatus 3 and the ventilation apparatus 4 will be explained. First, the PMV, which is most commonly used among the comfort level indexes, will be explained.

For people, a tired feeling and a pleasant feeling during work are caused by physical environmental factors around people, such as a thermal environment, a visual environment, and an acoustic environment. The thermal environment includes, for example, temperature, humidity, airflow, and radiation. The visual environment includes, for example, lighting. The acoustic environment includes, for example, sound pressure. A composite environment, which is a combination of those environmental factors, affects work compatibility and tiredness of a person working under the environment.

The PMV was proposed by Professor Fanger at the Technical University of Denmark as a numerical index for evaluating a comfort level and a thermal sensation of a person in a thermal environment. The PMV was adopted as the International Standard ISO-7730 in 1984. The PMV associates a thermal load of a person's body with a thermal sensation of the person. More specifically, for the PMV, a heat-balance equation for human body is generated by using air-environment-side parameters and human-body-side parameters, and the PMV is calculated by substituting an equation of a skin temperature at which people feels comfortable and a heat transfer amount by sweating into the heat-balance equation. The air-environment-side parameters include, not only an air temperature, but also a radiant temperature, a radiation temperature, a humidity, an airflow and other parameters. The human-body-side parameters include an amount of activity of a person, a clothing amount, an average skin temperature, and other parameters.

In Embodiment 1, an individual PMV (IPMV), which indicates a more local value than the PMV described above and indicates an index of an individual's comfort level, is used as the comfort level index. Hereinafter, the IPMV is referred to as a local comfort level index. Although a value of the IPMV is based on the PMV, the value does not indicate an average value of thermal sensation for the entire air-conditioning target space but indicates a local thermal sensation for a specific position. The specific position is a position of a person specified in the air-conditioning target space and the local thermal sensation is a thermal sensation at the position. The local thermal sensation is also referred to as a local comfort level. One example of the equation representing the IPMV is given below.
[Equation 1]

$$IPMV = (0.303e^{-0.036M} + 0.028) \times (M - W - Ed - Es - Ere - Cre - R - C) \cdots (1)$$

The eight variables in Equation 1 will be explained. M is a metabolic rate [W/m$^2$] and W is an amount of mechanical work [W/m$^2$]. Ed is an amount of insensible water loss [W/m$^2$] and Es is an amount of evaporative heat loss [W/m$^2$] from a skin surface by sweating. Ere is an amount of latent heat loss [W/m$^2$] by respiration and Cre is an amount of sensible heat loss [W/m$^2$] by respiration. R is an amount of radiant heat loss [W/m$^2$] and C is an amount of convection heat loss [W/m$^2$].

The values of the eight variables in Equation 1 can be derived by using six parameters, which are a room temperature, an airflow speed, a radiation temperature, a humidity, a clothing amount of a person present in the room, and an amount of activity of the person. In the IPMV, values of the room temperature, the airflow speed, and the radiation temperature correspond to the position of each person. Therefore, in this case, the room temperature is a local temperature, the airflow speed is a local airflow speed, and the radiation temperature is a local radiation temperature.

As shown in Equation 1, the IPMV is an expression of a local thermal sensation corresponding to information of an individual body and the position of the body in the space to be analyzed. The body information and the position of the body are different for each person. A range of the IPMV is from -3 to +3. When IPMV = 0, it represents neutral. When IPMV = 0, the thermal sensation is defined as comfortable. When IPMV = 3, IPMV = 2, and IPMV = 1, the thermal sensations are defined as hot, warm, and slightly warm, respectively. When IPMV = -3, IPMV = -2, IPMV = -1, the thermal sensations are defined as cold, cool, and slightly cool, respectively. That is, it is defined that, as the IPMV comes closer to zero, the comfort level of an individual is improved.

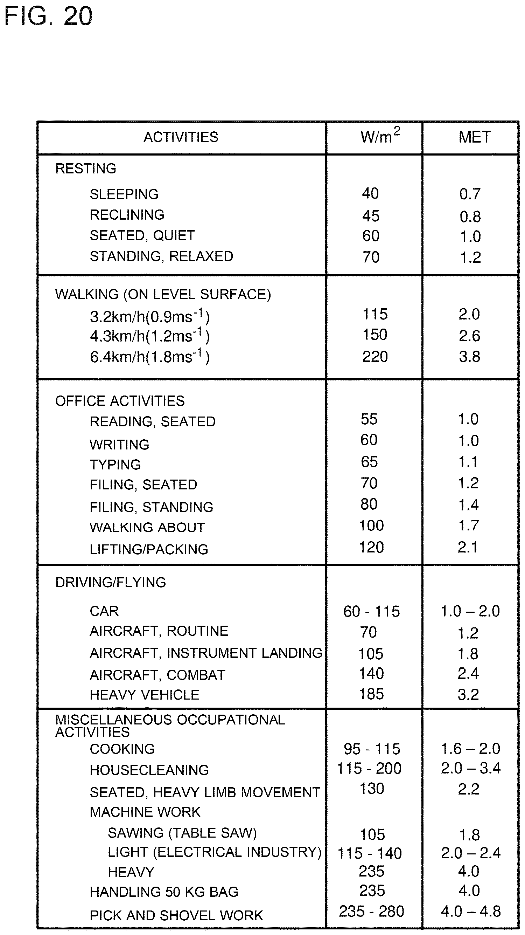

The amount of activity is an example of biological information of a person, and is expressed by a unit indicating the intensity of activity called Metabolic Equivalent (MET). Various activities are expressed by numerical values using MET. Fig. 20 is a table illustrating examples of activities and energy metabolic rates representing the amounts of the activities. The amount of activity is calculated by using Equation 2. For example, the activity amount for a person in sleeping is 0.7 MET, and the activity amount for a person watching TV while sitting quietly is 1 MET.

[Equation 2]

$$MET = \frac{AMOUNT\ OF\ ENERGY\ METABOLISM\ M\ DURING\ SPECIFIC\ ACTIVITY}{AMOUNT\ OF\ ENERGY\ METABOLISM\ Ms\ DURING\ QUIET\ SITTING} \cdots (2)$$

The position determination unit 12a is configured to determine the position of a person staying in the room by analyzing data of a thermal image detected by the infrared sensor 69. The position coordinates of a person present in the room are calculated by applying the Pythagorean theorem to the inclination angle θv and the angle θh of the position at which the person is determined to be present.

The activity amount determination unit 12b is configured to determine the amount of activity of a person determined by the position determination unit 12a by analyzing data of a thermal image detected by the infrared sensor 69. A table in which MET values corresponding to shapes and surface temperatures of people to be determined from a thermal image are recorded is stored in advance in the storage device 21. The activity amount determination unit 12b is configured to detect the shape and the surface temperature of a person from a thermal image data and determine the amount of activity for the detected person by referring to the table.

The comfort level calculation unit 14 is configured to calculate a comfort level index distribution (IPMV distribution), which is a distribution of local comfort level indexes, by using thermal environment distribution information calculated by the fluid analyzing unit 13. The comfort level calculation unit 14 is configured to, when the comfort level calculation unit 14 calculates an IPMV distribution for each amount of activity to be performed by a person present in the air-conditioning target space, store the IPMV distributions and IPMVk corresponding to the activity amount of each person in the storage device 21. In addition, for a case where the IPMV need to be comprehensively improved for multiple people staying in the same room, the comfort level calculation unit 14 is configured to calculate a comfort efficiency indicating a comprehensive comfort level of the multiple people.

Now, one example of the method for calculating the comfort efficiency will be described. By using Equation 3, the comfort efficiency ζ for each of the plurality of the control patterns is calculated by using the information of the positions and the activity amounts of the users in the room.

[Equation 3]

$$\zeta = (1 - 2|IPMV_1|) \times (1 - 2|IPMV_2|) \times \cdots \times (1 - 2|IPMV_K|) \times 100\% \quad \cdots (3)$$

In Equation 3, k represents an identification number, which is different for each user, and K represents the number of users in the room. In Embodiment 1, K is equal to or larger than one. In the case of the room Rm shown in Fig. 2, K is three. A target value for the local comfort level index IPMV is set to be within a range of ±0.5.

By relaxing a comfort level standard, a target value of the local comfort level index IPMVk may be changed to be within a range of ±1, ⋯ , ±3, from the range of ±0.5. In this case, to distinguish the comfort efficiencies ζ, the comfort efficiency for IPMVk set within the range of ±0.5 is denoted as $\zeta_{0.5}$, the comfort efficiency for IPMVk set within the range of ±1 is denoted as $\zeta_1$, and the comfort efficiency for IPMVk set within the range of ±3 is denoted as $\zeta_3$.

The comfort efficiency ζ indicates how close the thermal sensations of the plurality of the users are to the neutral value (local IPMV = 0). The comfort efficiency ζ indicates a comprehensive comfort level of the users present in a room. It is considered that the higher the comfort efficiency ζ (maximum 100%), the more the plurality of the users in the room can satisfy the comfort level. That is, the comfort efficiency ζ = 100% indicates that the plurality of the users feel comfortable, and the comfort efficiency ζ = 0% indicates that the plurality of the users feel uncomfortable.

The determination unit 15 is configured to extract, from among the plurality of the control patterns, a control pattern in which the local comfort level index satisfies a pre-determined comfort level standard. The comfort level standard is, for example, a condition that the IPMV is within the range of ±0.5. In addition, the determination unit 15 is configured to extract, from among the plurality of the control patterns, a control pattern in which the air age at the position of a person satisfies a pre-determined air quality standard. The air quality standard is, for example a condition that the air age is 125 seconds or over. Then, the determination unit 15 is configured to determine, from among the plurality of the control patterns, the control pattern in which the local comfort level index satisfies the comfort level standard and the air age satisfies the air quality standard for each person, as a control pattern to be set to the air-conditioning apparatus 3 and the ventilation apparatus 4.

The determination unit 15 is configured to determine the control pattern to bring the IPMV for the position at which a person is present closer to neutral, instead of bringing the IPMV for the entire indoor space to neutral. The determination unit 15 does not use the IPMV for a position at which no person is present when determining the control pattern.

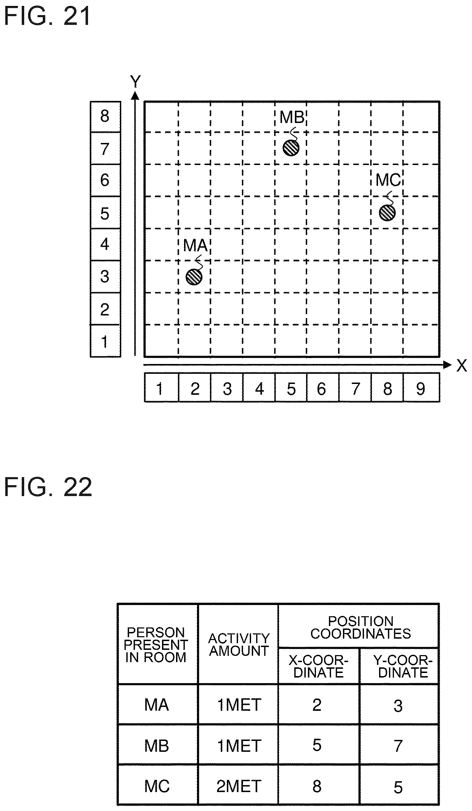

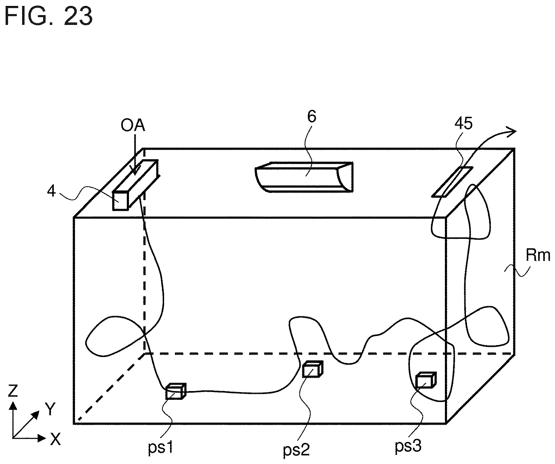

Next, a method for processing information by the information processing device 2 according to Embodiment 1 will be described. Fig. 21 is an image diagram illustrating an example of positions of multiple people detected by the person determination unit shown in Fig. 15. Fig. 21 indicates that three users MA, MB, and MC are detected and shows the XY coordinates of each user. Fig. 22 is an example of a table that is stored in the storage device and contains the positions and the activity amounts of the multiple people determined by the person determination unit shown in Fig. 15. Fig. 23 is a diagram schematically indicating that, in the room shown in Fig. 2, outside air is supplied from the ventilation device and the age of air varies depending on the location.

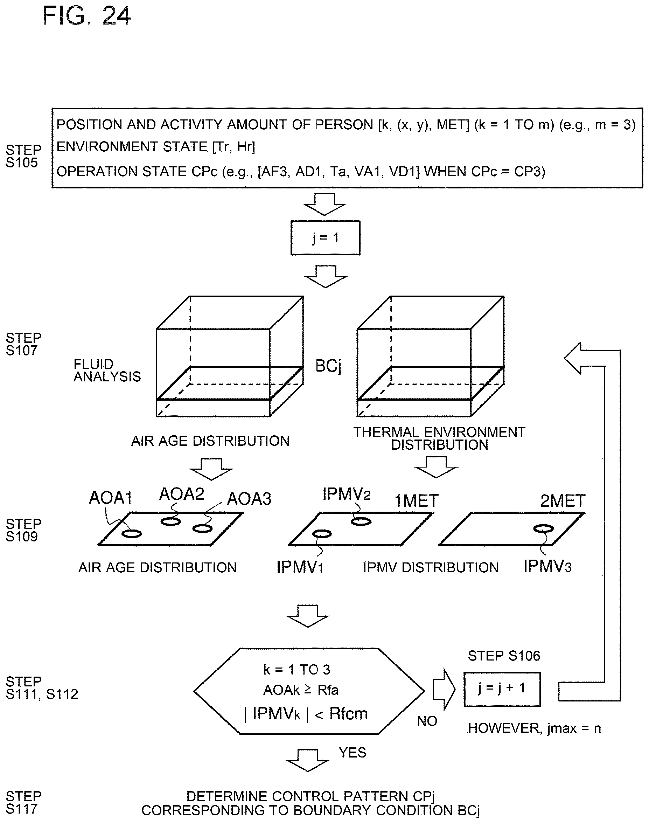

Fig. 24 is a schematic diagram illustrating a procedure of information processing by the information processing device according to Embodiment 1. Rfa shown in Fig. 24 represents a value of the air quality standard and is 125 seconds, for example. Rfcm shown in Fig. 24 represents a value of the comfort level standard and is 0.5, for example. In addition, in Fig. 24, m represents the number of people present in the room, and n represents the maximum value of the boundary condition BC (control pattern CP). Figs. 25 and 26 show a flowchart illustrating an operation procedure of the information processing device according to Embodiment 1.

In step S101 shown in Fig. 25, the communication unit 11 obtains information of environment states from the air-conditioning apparatus 3. The communication unit 11 obtains data of a thermal image detected by the infrared sensor 69 as information (heat emission state) indicating the positions and activity states of people.

In step S102, the communication unit 11 obtains information of operation states from both the air-conditioning apparatus 3 and the ventilation apparatus 4. The information indicating operation states of the air-conditioning apparatus 3 includes an air-sending pattern including the temperature Ta detected by the temperature sensor 68, and the air volume AF and the airflow direction AD set in the load-side unit 6. The information indicating operation states of the ventilation apparatus 4 includes an air-sending pattern including the air volume VF and the airflow direction VD. The information indicating operation states of the air-conditioning apparatus 3 may include the frequency of the compressor 51, the condensing temperature, the evaporating temperature, and the opening degree of the expansion valve 53.

In step S103, the position determination unit 12a determines the XY coordinate position of each person from the thermal image data to obtain information of the position of the person. More specifically, the position determination unit 12a determines that the position of the user MA is at the coordinates (2, 3), the position of the user MB is at the coordinates (5, 7), and the position of the user MC is at the coordinates (8, 7). In step S104, the activity amount determination unit 12b determines the amount of activity of each person from the thermal image data to obtain information of the amount of activity of the person.

In step S105, the fluid analyzing unit 13 sets the environment states, the operation states, and the position and the activity amount of each person present in the room as data for fluid analysis. The fluid analyzing unit 13 refers to the boundary condition database. The boundary condition database includes the table (Fig. 16) indicating the control patterns in which the air-sending pattern of the load-side unit 6 and the air-sending pattern of the ventilation apparatus 4 are change in stages, and the table (Fig. 17) indicating the correspondence between the control patterns and the boundary conditions. The fluid analyzing unit 13 refers to the boundary condition database to identify the control pattern CPc being executed based on the information of the operation states obtained in step S102.

The fluid analyzing unit 13 refers to the maximum value of the identifiers of the boundary conditions registered in the boundary condition database to determine the maximum number of times the CFD fluid analysis is executed. In step S106, the fluid analyzing unit 13 determines whether or not the CFD fluid analysis has been executed the determined maximum number of times. In step S107, the fluid analyzing unit 13 performs the CFD analysis on each of the boundary conditions BC in order from the boundary condition BC1. The fluid analyzing unit 13 calculates a thermal environment distribution including a temperature distribution, a humidity distribution, and an airflow speed distribution, for the boundary condition BC being analyzed. In addition, the fluid analyzing unit 13 calculates an air age distribution for the boundary condition BC being analyzed.

In step S108, the fluid analyzing unit 13 stores the thermal environment distribution information and the air age distribution information in the storage device 21. The comfort level calculation unit 14 calculates a comfort level index distribution based on the thermal environment distribution information. In step S109, the determination unit 15 refers to the comfort level index distribution and the air age distribution and extracts the IPMVk and the air age at the position of each person in the room based on the position and the amount of activity of the person.

In step S110, the determination unit 15 determines, for each person in the room, whether or not the IPMVk satisfies the comfort level standard and whether or not the air age satisfies the air quality standard, generates a table in which the results are recorded, and stores to the table in the storage device 21. In Embodiment 1, the comfort level standard is that the IPMVk shall be within a range of ±0.5, and the air quality standard is that the air age shall be within 125 seconds.

In step S111, the determination unit 15 determines whether or not the IPMVk of each person in the room satisfies the comfort level standard for the boundary condition BC being analyzed. When the determination unit 15 determines that the IPMVk of any one of the users MA, MB, and MC does not satisfy the comfort level standard, the process returns to step S106 and the fluid analyzing unit 13 is instructed to analyze the next boundary condition BC.

Meanwhile, in step S111, when all of the IPMVk of the users MA, MB, and MC satisfy the comfort level standard, the determination unit 15 determines whether or not the air ages for all users in the room satisfy the air quality standard for the boundary condition BC being analyzed (step S112).

When there is a boundary condition BC in which the IPMVk and the air ages of all people in the room satisfy the corresponding standards in the determination result of step S112, the determination unit 15 selects the boundary condition BC (step S113). Then, the determination unit 15 determines the control pattern CP corresponding to the selected boundary condition BC (step S117). Then, the determination unit 15 transmits the determined control pattern to the air-conditioning apparatus 3 and the ventilation apparatus 4 (step S118).

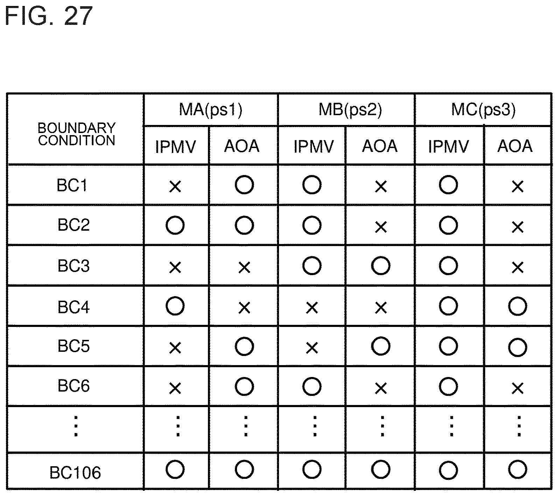

Fig. 27 is an example of a table stored in the storage device in step S110 shown in Fig. 26. In the example shown in Fig. 27, at least one of the IPMVk and the air ages of the all people in the room does not satisfy the corresponding standards in the boundary conditions BC1 to BC105, but all of the IPMVk and the air ages of the people in the room satisfy the standards in the boundary condition BC106. In this case, in step S118, the determination unit 15 transmits the control pattern CP106 to the air-conditioning apparatus 3 and the ventilation apparatus 4.

Meanwhile, in step S112, when the determination unit 15 determines that the air age of any one of the users MA, MB, and MC does not satisfy the air quality standard, the process returns to step S106 and the fluid analyzing unit 13 is instructed to analyze the next boundary condition BC.

In step S106, when the determination unit 15 determines all the boundary conditions BC1 to BC243 but there is no boundary condition in which all IPMV and all air ages satisfy the corresponding standards, the process proceeds to step S114. In step S114, the determination unit 15 extracts boundary conditions, from among the boundary conditions BC1 to BC243, in which all air ages of the people in the room satisfy the air quality standard. The determination unit 15 transmits information of the extracted boundary conditions to the comfort level calculation unit 14.

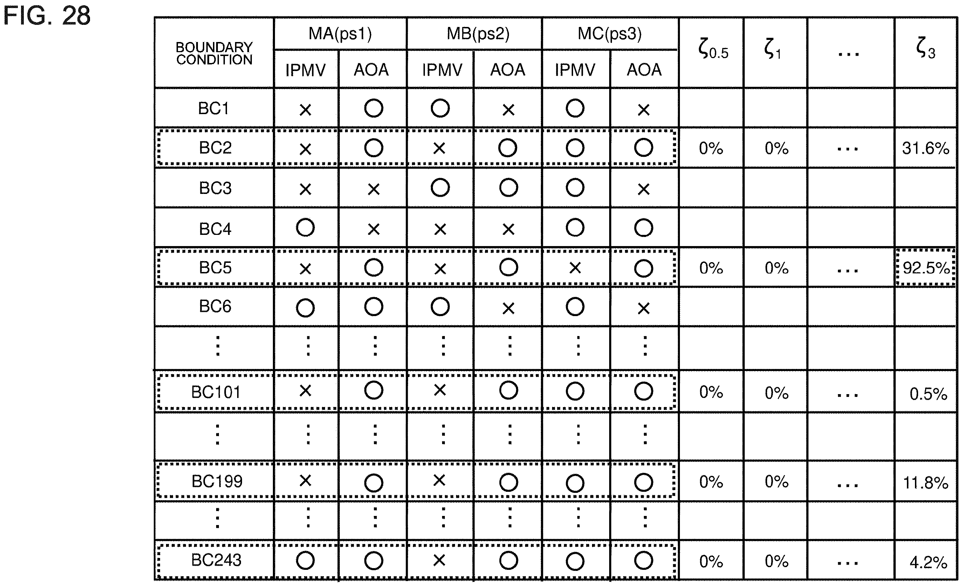

In step S115, the comfort level calculation unit 14 relaxes the standard for IPMV and calculates comfort efficiencies $\zeta$. For example, the comfort level calculation unit 14 relaxes the standard for IPMVk to be within a range of $\pm 1$, $\pm 1.5$, $\cdots$, and $\pm 3$ and calculates the comfort efficiency $\zeta_1$, the comfort efficiency $\zeta_{1.5}$, $\cdots$, and the comfort efficiency $\zeta_3$. Fig. 28 is an example of a table recorded in the storage device in step S115 shown in Fig. 25.

Fig. 28 shows the comfort frequencies for a case where the standard of IPMV is relaxed for the boundary conditions extracted in step S114. Fig. 28 indicates that there are five boundary conditions, BC2, BC5, BC101, BC199, and BC243, in which all air ages of the people present in the room satisfy the air quality standard, when the air quality standard is relaxed to be within a range of $\pm 3$. The comfort level calculation unit 14 calculates the comfort efficiency $\zeta_{0.5}$ for IPMVk set within a range of $\pm 0.5$, the comfort efficiency $\zeta_1$ for IPMVk set within a range of $\pm 1$, the comfort efficiency $\zeta_2$ for IPMVk set within a range of $\pm 2$, and the comfort efficiency $\zeta_3$ for IPMVk set within a range of $\pm 3$ in the boundary conditions extracted by the determination unit 15.

In step S116, the determination unit 15 refers to the table shown in Fig. 28, and determines, from among the five boundary conditions in which all air ages of the people present in the room satisfy the air quality standard, the boundary condition having the maximum comfort efficiency $\zeta$. After the determination unit 15 selects the boundary condition BC in step S116, the process proceeds to step S117.

In step S119, the determination unit 15 determines whether or not a fixed period of time has elapsed since the control pattern was transmitted to the air-conditioning apparatus 3 and the ventilation apparatus 4 last time. When a fixed period of time has not elapsed yet, the control device 22 enters a standby state. When it is determined that a fixed period of time has elapsed in step S119, the control device 22 returns the process to step S101 shown in Fig. 25.

Note that although, in step S115 shown in Fig. 25, the comfort level calculation unit 14 calculates comfort efficiencies $\zeta$ in order for the boundary conditions extracted by the determination unit 15, the calculation method is not limited thereto. For example, the determination unit 15 may generate history information in which conditions including heat load and information on control pattern in which the maximum comfort efficiency $\zeta$ is obtained are combined. By referring to the history information, the calculation may be performed for less control patterns. In this case, the load of the calculation processing by the comfort level calculation unit 14 is reduced.

For example, when the determination unit 15 selects the boundary condition having the maximum comfort efficiency $\zeta$ in step S116 shown in Fig. 25, the determination unit 15 identifies the control pattern corresponding to the boundary condition in step S117. Then, the determination unit 15 stores a combination of an input condition including the heat load of the air-conditioning target space and the control pattern having the maximum comfort efficiency $\zeta$ in the storage device 21 as load data. As a result, a plurality of load data items are stored in chronological order in the storage device 21.

The determination unit 15 narrows down, from among the plurality of the control patterns, the number of control patterns to be executed by the comfort level calculation unit 14 based on the plurality of the load data items stored in chronological order. For this reason, in step S115 shown in Fig. 25, the number of the comfort efficiencies $\zeta$ to be calculated by the comfort level calculation unit 14 is reduced for an air-conditioning target space having a heat load similar to a heat load of the load data stored in the storage device 21. As a result, the load of the calculation processing of the comfort level calculation unit 14 is reduced.

In addition, although, in Embodiment 1, a case where multiple people are present in the air-conditioning target space is described, the number of people staying in the room may be one.

The air-conditioning system 1 according to Embodiment 1 includes the air-conditioning apparatus 3, the ventilation apparatus 4, the detection unit 7, the storage device 21 functioning as a storage unit, the fluid analyzing unit 13, the comfort level calculation unit 14, and the determination unit 15. The detection unit 7 is configured to detect environment states including the temperature of air in the air-conditioning target space, and the position and the activity state of a person present in the air-conditioning target space. The storage device 21 is configured to store a plurality of control patterns CP, each of which is a combination of a plurality of air-sending patterns of air blown out to the air-conditioning target space by the air-conditioning apparatus 3 and a plurality of air-sending patterns of outside air supplied to the air-conditioning target space by the ventilation apparatus 4. The fluid analyzing unit 13 is configured to calculate, for each of the control patterns CP, thermal environment distribution information and air age distribution information by using information of operation states of the air-conditioning apparatus 3 and the ventilation apparatus 4, and information of the environment states detected by the detection unit 7. The comfort level calculation unit 14 is configured to calculate, for each of the thermal environment distribution information, a local comfort level index from the position and the activity state of the person detected by the detection unit 7. The determination unit 15 is configured to determine, from among the plurality of the control patterns CP, a control pattern CP in which the local comfort level index satisfies the pre-determined comfort level standard and the air age at the position of the person satisfies the pre-determined air quality standard, as a control pattern CP to be set to the air-conditioning apparatus 3 and the ventilation apparatus 4.

According to Embodiment 1, in accordance with the environment states of the room and the position and the activity state of a person present in the room, a control pattern in which both the local conform level index and the air age for the person present in the room satisfy the corresponding standards is determined from among the plurality of the control patterns. Therefore, when the air-conditioning apparatus 3 and the ventilation apparatus 4 are operated in accordance with the control pattern in which both the local conform level index and the air age satisfy the standards, both health and comfort level of the person present in the room can be maintained.

Embodiment 2

In Embodiment 2, part of the processing executed by the information processing device 2 described in Embodiment 1 is executed by the air-conditioning apparatus 3. In Embodiment 2, the same features as those described in Embodiment 1 are denoted by the same reference signs, and their detailed descriptions will be omitted.

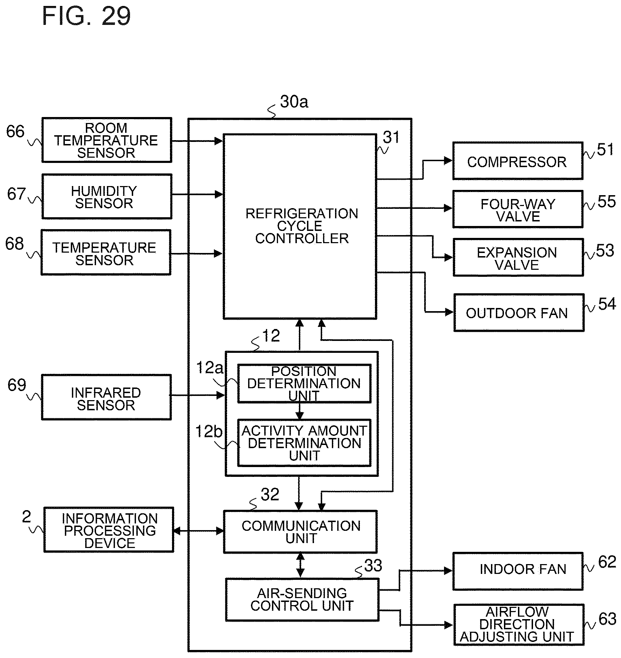

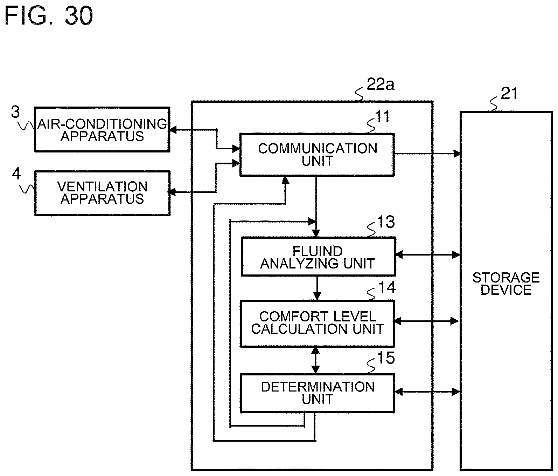

The configuration of the air-conditioning system of Embodiment 2 will be described. The entire configuration of the air-conditioning system 1 of Embodiment 2 is the same as the configuration described with reference to Fig. 1. Fig. 29 is a block diagram illustrating an example of the configuration of the air-conditioning apparatus in the air-conditioning system according to Embodiment 2. Fig. 30 is a block diagram illustrating an example of the configuration of the information processing device in the air-conditioning system according to Embodiment 2.

As compared with the controller 30 shown in Fig. 11, a controller 30a of the air-conditioning apparatus 3 of Embodiment 2 has a person determination unit 12, in addition to the units shown in Fig. 11. On the other hand, a control device 22a of the information processing device 2 of Embodiment 2 is not provided with the person determination unit 12, as compared with the control device 22 shown in Fig. 15. That is, the person determination unit 12 provided in the control device 22 in Embodiment 1 is provided in the controller 30a in Embodiment 2.

In Embodiment 2, part of the processing executed by the information processing device 2 described in Embodiment 1 is executed by the air-conditioning apparatus 3. In addition, the processing that the air-conditioning apparatus 3 executes, in place of the information processing device 2, is not limited to the processing of the person determination unit 12. Furthermore, part of the processing executed by the information processing device 2 may be executed by a device, such as a computer, that is a different device from the air-conditioning apparatus 3 and is connected to the network 100.

According to Embodiment 2, not only a similar effect to that of Embodiment 1 can be obtained, but also a load of the calculation processing of the information processing device 2 can be reduced.

Embodiment 3

In Embodiment 3, the information processing device 2 described in Embodiment 1 is configured to preferentially perform the fluid analysis for a boundary condition in which the comfort level and the air quality of a person present in the air-conditioning target space are likely to satisfy the corresponding standards. In Embodiment 3, the same features as those described in Embodiment 1 are denoted by the same reference signs, and their detailed descriptions will be omitted.

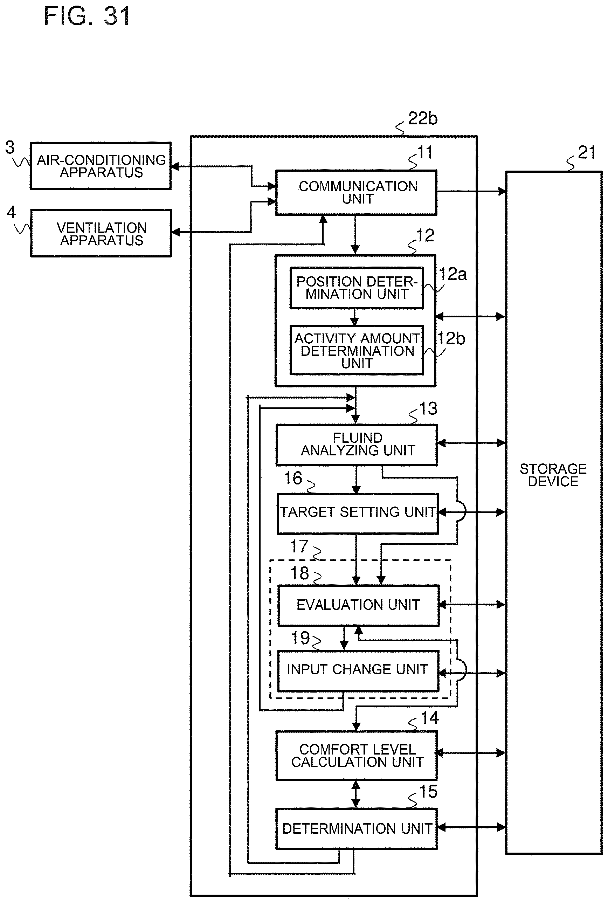

The configuration of the air-conditioning system of Embodiment 3 will be described. The entire configuration of the air-conditioning system 1 of Embodiment 3 is the same as the configuration described with reference to Fig. 1. Fig. 31 is a block diagram illustrating an example of the configuration of the information processing device in the air-conditioning system according to Embodiment 3.

A control device 22b has a target setting unit 16 and an inverse analyzing unit 17, in addition to the features shown in Fig. 15. The inverse analyzing unit 17 has an evaluation unit 18 and an input change unit 19.

Although, in Embodiment 1, the fluid analyzing unit 13 is configured to perform the fluid analysis one by one for a plurality of control patterns, the fluid analyzing unit 13 in Embodiment 2 is configured to perform the fluid analysis by using the control pattern CPc being executed as an input condition. That is, the fluid analyzing unit 13 is configured to perform the fluid analysis for the control pattern CPc being executed when the fluid analyzing unit 13 obtains information of the environment states and information of the position and the activity states of a person detected by the detection unit 7. The fluid analyzing unit 13 stores, in the storage device 21, the thermal environment distribution information and the air age distribution information calculated by performing the fluid analysis.

The comfort level calculation unit 14 is configured to calculate the IPMV of a person present in the room by using thermal environment distribution information calculated by the fluid analyzing unit 13 and information of the position and the activity amount of the person detected by the detection unit 7. The comfort level calculation unit 14 is configured to store the calculated IPMV in the storage device 21. The position and the activity amount of the person detected by the detection unit 7 is determined by the person determination unit 12 and stored in the storage device 21.

The target setting unit 16 is configured to read the air age at the position of a person detected by the detection unit 7 from the air age distribution information stored in the storage device 21, and read the IPMV of the person detected by the detection unit 7 from the storage device 21. The target setting unit 16 is configured to set a target value for the air age at the position of a person detected by the detection unit 7 and a target value for the IPMV of the person detected by the detection unit 7.

The evaluation unit 18 is configured to compare sensitivities of a plurality of control parameters and extract a control parameter having a relatively high sensitivity. The sensitivity of each control parameter indicates how much effect the control parameter has on the process of bringing the calculated air age or the calculated IPMV close to the target value. Examples of the control parameters include the air volume AF, airflow direction AD, temperature TA, air volume VF, and the airflow direction VD. The input change unit 19 is configured to change a setting condition for the control parameter extracted by the evaluation unit 18. The input change unit 19 is configured to then transmit, to the fluid analyzing unit 13, change information including the control parameter extracted by the evaluation unit 18 and information on a changed content in the setting condition of the control parameter, for the input condition of the next CFD fluid analysis.

The fluid analyzing unit 13 is configured to, when the fluid analyzing unit 13 receives the change information from the input change unit 19, set the input condition for the next CFD analysis based on the change information. More specifically, the fluid analyzing unit 13 is configured to update the setting condition for the control pattern CPc being executed, based on the change information. The fluid analyzing unit 13 is configured to then perform the CFD fluid analysis for the updated input condition and calculate thermal environment distribution information and air age distribution information.

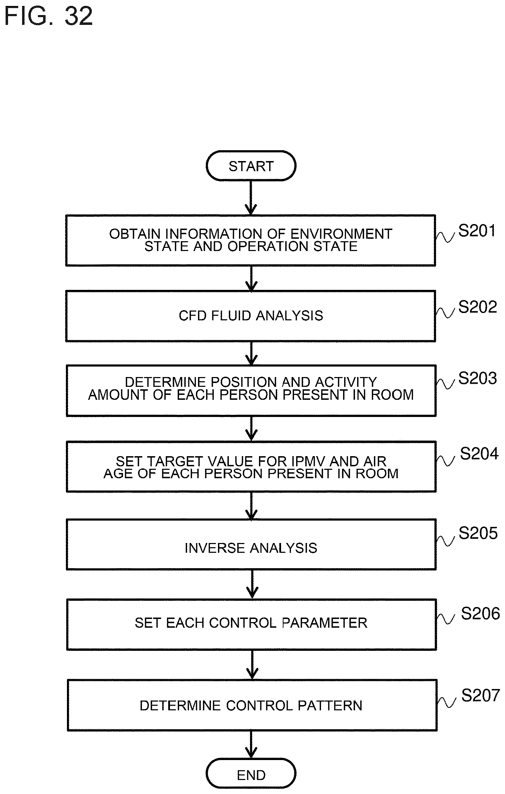

Next, a method for processing information by the information processing device 2 according to Embodiment 3 will be described. Fig. 32 is a flowchart illustrating an operation procedure of the information processing device according to Embodiment 3. In Fig. 32, because the processing of step S201 corresponds to the processing of steps S101 and S102 shown in Fig. 25 and the processing of step S203 corresponds to the processing of steps S103 and S104 shown in Fig. 25, detailed descriptions for the processing of step S201 and the processing of step S203 will be omitted. Here, a description will be made for a case where multiple people are present in the room.

In step S202 shown in Fig. 32, the fluid analyzing unit 13 performs the fluid analysis for the control pattern CPc being executed. The fluid analyzing unit 13 stores, in the storage device 21, the thermal environment distribution information and the air age distribution information calculated by performing the fluid analysis. In step S204, the target setting unit 16 sets a target value for the air age at the position of each person and a target value for the IPMV of the person, for the multiple people staying in the room.

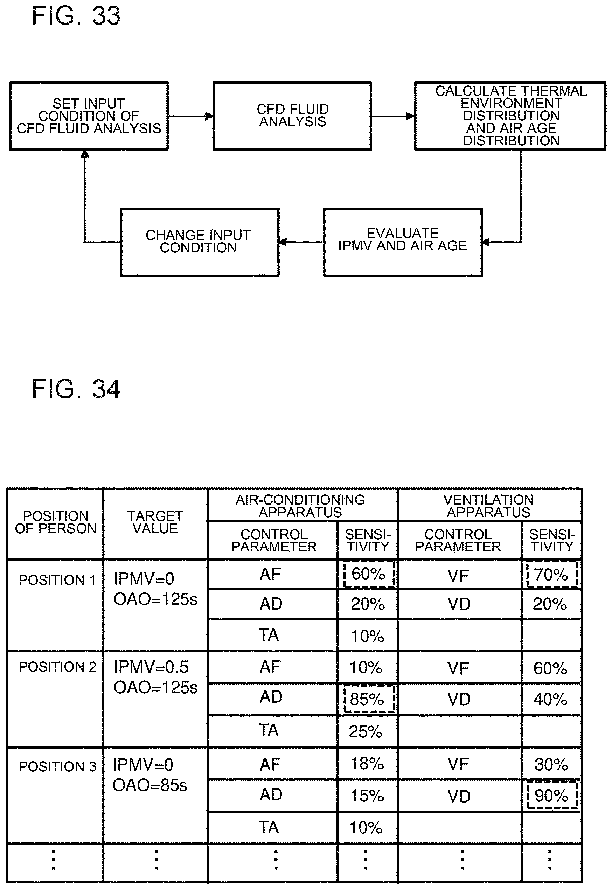

Next, the inverse analysis processing shown in step S205 will be described. Fig. 33 is a diagram schematically illustrating a procedure of the inverse analysis processing of step S205 in Fig. 32. The evaluation unit 18 compares sensitivities of a plurality of control parameters and extracts a control parameter that has a relatively high sensitivity. The sensitivity of each control parameter indicates how much effect the control parameter has on the process of bringing the calculated air age or the calculated IPMV close to the target value. The evaluation unit 18 generates a table recording the calculated sensitivity information and store the table in the storage device 21.

Fig. 34 is a table illustrating an example of the sensitivity information recorded in the inverse analysis processing of step S205 in Fig. 32. The evaluation unit 18 is configured to accumulate the sensitivity calculated for each control parameter in the table, as shown in Fig. 34. Referring to the example shown in Fig. 34, the control parameters air volume AF and air volume VF have relatively higher sensitivities than the sensitivities of other control parameters for the person staying at position 1 in the room. For the person staying at position 2 in the room, the sensitivity of the control parameter of airflow direction AD is relatively high, compared with the sensitivities of other control parameters. For the person staying at position 3 in the room, the sensitivity of the control parameter of airflow direction VD is relatively high, compared with the sensitivities of other control parameters. The evaluation unit 18 is configured to extract the control parameter having a relatively high sensitivity for each position at which a person is present.

As shown in Fig. 33, the input change unit 19 changes a setting condition for the control parameter extracted by the evaluation unit for the position of each person such that the IPMV and the air age approach the target values. The input change unit 19 transmits the change information to the fluid analyzing unit 13.

The fluid analyzing unit 13 updates the input condition for the next CFD fluid analysis based on the change information when the fluid analyzing unit 13 receives the change information from the input change unit 19. The fluid analyzing unit 13 then calculates thermal environment distribution information and air age distribution information by performing the CFD fluid analysis for the updated input condition. In this manner, the control device 22b repeats the calculation in which the result of one CFD fluid analysis is fed back to the input condition of the next CFD fluid analysis.

In Fig. 33, each time the fluid analyzing unit 13 calculates new thermal environment distribution information and new air age distribution information, the comfort level calculation unit 14 calculates the IPMV for each person based on the thermal environment distribution information. In addition, the determination unit 15 reads the air age for each person from the air age distribution information. Then, the determination unit 15 determines whether or not the IPMV satisfies the comfort level standard and the air age satisfies the air quality standard for each person.

When the IPMV satisfies the comfort level standard and the air age satisfies the air quality standard for each person, the determination unit 15 sets the current setting condition of each control parameter (step S206). Then, the determination unit 15 determines, from among the plurality of the control patterns, a control pattern having the setting conditions of control parameters set in step S32 (step S207). Then, the determination unit 15 transmits the determined control pattern to the air-conditioning apparatus 3 and the ventilation apparatus 4, as with step S118 shown in Fig. 26.

The inverse analysis processing described with reference to Fig. 33 repeats the calculation that feeds back the result of one CFD fluid analysis to the input condition of the next CFD fluid analysis. In this calculation process, a searching technique, such as the genetic algorithm or the adjoint method, may be used to improve calculation efficiency of the inverse analysis processing.

According to Embodiment 3, the fluid analysis is preferentially performed for a boundary condition in which the comfort level and the air quality of a person present in the air-conditioning target space are likely to satisfy the corresponding standards. Thus, the number of times the fluid analysis processing is performed until the control pattern in which the comfort level and the air quality for a person present in the air-conditioning target space satisfy the corresponding standard, can be reduced. As a result, the load of the calculation processing by the control device 22 can be reduced.

Note that although Embodiment 3 is described based on the air-conditioning system 1 of Embodiment 1, Embodiment 3 may be applied to the air-conditioning system 1 of Embodiment 2.

Note that although the infrared sensor 69 detects the position and the activity amount of a person in Embodiments 1 to 3, the device for detecting the position and the activity amount of a person is not limited to the infrared sensor 69. For example, an activity amount detection unit configured to detect the activity amount of a person may be provided in a sensor different from the infrared sensor 69. The sensor that detects the activity amount of a person may be a wearable sensor installed in a wearable terminal, such as a watch. A case where the activity amount detection unit is a wearable sensor will be described below.

(Modification Example 1)

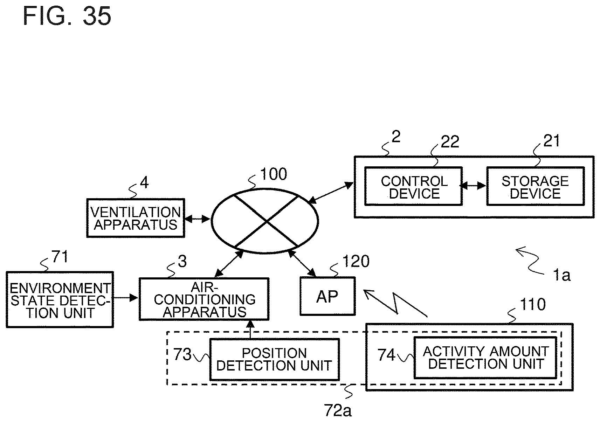

Fig. 35 is a diagram illustrating an example of the configuration of the air-conditioning system of Modification Example 1. In the configuration shown in Fig. 35, the same features as those described with reference to Figs. 1 to 15 are denoted by the same reference signs, and their detailed descriptions will be omitted in Modification Example 1.

An air-conditioning system 1a includes the air-conditioning apparatus 3, to which a position detection unit 73 as a unit for detecting the position of a person is connected, the ventilation apparatus 4, the information processing device 2, an access point (AP) 120, and a wearable terminal 110 worn by each person. The position detection unit 73 is the infrared sensor 69 shown in Fig. 3.

The AP 120 is installed in the room, which is the air-conditioning target space of the air-conditioning apparatus 3. The AP 120 includes a short-range wireless communication unit (not shown), such as Bluetooth (registered trademark), and a network communication unit (not shown) that supports a communication protocol of the network 100. The communication protocol is the TCP/IP, for example.

The wearable terminal 110 is provided in the form of a watch or a bracelet, for example. The wearable terminal 110 includes an activity amount detection unit 74 configured to detect the pulse of a person, as the amount of activity of the person, at pre-determined intervals. The skin temperature of the user may be used as the amount of activity. In addition, the wearable terminal 110 includes a storage unit (not shown) configured to store a terminal identifier, which is different for each terminal, and a program, and a CPU (not shown) configured to execute processing according to the program.

The CPU (not shown) of the wearable terminal 110 is configured to, when the activity amount detection unit 74 detects the activity amount of a person, transmit user information including the information of the activity amount and the terminal identifier to the information processing device 2 via the AP 120 and the network 100. The storage unit (not shown) of the wearable terminal 110 may store the XY coordinates of the installation position of the AP 120. The CPU (not shown) of the wearable terminal 110 is configured to estimate the distance from the installation position of the AP 120 by referring to the intensity of the radio wave from the AP 120. The CPU (not shown) of the wearable terminal 110 is configured to then add, as the position information of the person, the information of the estimated position to the user information. For example, when a plurality of APs 120 are installed in the room, the CPU (not shown) of the wearable terminal 110 compares the intensities of radio waves from the plurality of the APs 120, and can thus more accurately estimate the position of the person in the room. The control device 22 of the information processing device 2 is configured to associate the user information received form the wearable terminal 110 with the information of the position of the user detected by the position detection unit 73. Thus, the control device 22 can associate the position of each person in the room specified by the XY coordinates and the activity amount of the person with each other.

Note that although a case where the control device 22 associates the information of the position of a person received from the infrared sensor 69 and the information of the position included in the user information received from the wearable terminal 110 is explained in Modification Example 1, information of the position of a person is not required to be received from the infrared sensor 69 as long as the XY coordinates in the room stored in the storage device 21 in advance and the XY coordinates indicating the position of the person estimated by the wearable terminal 110 are coincident. In this case, the air-conditioning system 1a may include no infrared sensor 69.

In Modification Example 1 also, the information processing device 2 can accurately obtain information of the position and the activity amount for each person in steps S103 and S104 shown in Fig. 25, even when multiple people are present in the air-conditioning target space. As a result, for each of the multiple people, not only a more suitable air-conditioning can be performed, but also the air quality can be improved.

Reference Signs List

1, 1a: air-conditioning system, 2: information processing device, 3: air-conditioning apparatus, 4: ventilation apparatus, 5: heat-source-side unit, 6: load-side unit, 7: detection unit, 11: communication unit, 12: person determination unit, 12a: position determination unit, 12b: activity amount determination unit, 13: fluid analyzing unit, 14: comfort level calculation unit, 15: determination unit, 16: target setting unit, 17: inverse analyzing unit, 18: evaluation unit, 19: input change unit, 21: storage device, 22, 22a, 22b: control device, 25: first flap, 25a to 25d: wing, 26: second flap, 26a: front wing, 26b: back wing, 30, 30a: controller, 31: refrigeration cycle control unit, 32: communication unit, 33: air-sending control unit, 40: controller, 41: fan, 42: airflow direction adjusting unit, 43: communication unit, 44: air-sending control unit, 45: exhaust port, 51: compressor, 52: heat-source-side heat exchanger, 53: expansion valve, 54: outdoor fan, 55: four-way valve, 56: refrigerant pipe, 60: refrigerant circuit, 61: load-side heat exchanger, 62: indoor fan, 63: airflow direction adjusting unit, 66: room temperature sensor, 67: humidity sensor, 68: temperature sensor, 69: infrared sensor, 71: environment state detection unit, 72: person detection unit, 73: position detection unit, 74: activity amount detection unit, 81: air inlet, 82: air outlet, 90: processing circuit, 91: processor, 92: storage unit, 93: bus, 100: network, 110: wearable terminal, 120: access point, 201: broken line, 301 to 307: air layer, FL: floor, Img: thermal image, Rm: room

**Claims**

1.  An air-conditioning system comprising:

    an air-conditioning apparatus configured to condition air in an air-conditioning target space;
    a ventilation apparatus configured to supply outside air to the air-conditioning target space;
    a detection unit configured to detect an environment state including a temperature of air in the air-conditioning target space and a position and an activity state of a person present in the air-conditioning target space;
    a storage unit configured to store a plurality of control patterns,
    the control patterns each being a combination of a plurality of air-sending patterns of air blown out to the air-conditioning target space by the air-conditioning apparatus and a plurality of air-sending patterns of outside air supplied to the air-conditioning target space by the ventilation apparatus;
    a fluid analyzing unit configured to calculate, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus, and information of the environment state detected by the detection unit;
    a comfort level calculation unit configured to calculate, for each of the thermal environment distribution information, a local comfort level index indicating a comfort level of the person from the position and the activity state of the person detected by the detection unit; and

a determination unit configured to determine, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

2. The air-conditioning system of claim 1, further comprising:

a person determination unit configured to obtain the position and an activity amount of the person from thermal image data indicating a heat emission state in the air-conditioning target space, wherein the detection unit includes an infrared sensor configured to detect the heat emission state as the position and the activity state of the person present in the air-conditioning target space.

3. The air-conditioning system of claim 1, wherein
the detection unit includes

a wearable terminal worn by the person and configured to detect an activity amount of the person as the activity state of the person, and
an infrared sensor configured to detect the position of the person in the air-conditioning target space.

4. The air-conditioning system of claim 1, wherein
the detection unit includes a wearable terminal worn by the person,
the wearable terminal being configured to detect the position of the person in the air-conditioning target space and an activity amount of the person as the activity state of the person.

5. The air-conditioning system of any one of claims 2 to 4, wherein
the comfort level calculation unit is configured to

calculate a comfort level index distribution corresponding to the activity amount as a distribution of the local comfort level index in the air-conditioning target space, based on the thermal environment distribution information sequentially calculated by the fluid analyzing unit,
read the local comfort level index corresponding to the position of the person from the comfort level index distribution corresponding to the activity amount, and read the air age corresponding to the position of the person from the air age distribution information.

6. The air-conditioning system of claim 5, wherein

the storage unit includes a boundary condition database in which each of the plurality of the control patterns is used as a boundary condition, and
the fluid analyzing unit is configured to calculate the thermal environment distribution information and the air age distribution information by performing a fluid analysis for each of the plurality of the control patterns in the boundary condition database by using a fluid analysis model pre-determined for each control pattern, by using the information of the operation state of each of the air-conditioning apparatus and the ventilation apparatus and the information of the environment state, and store the calculated thermal environment distribution information and the calculated air age distribution information in the storage unit.

7. The air-conditioning system of claim 6, wherein
the determination unit is configured to, when the detection unit detects a plurality of persons, determine, from among the plurality of the control patterns, a control pattern in which the local comfort level indexes of the plurality of the persons satisfy the comfort level standard and the air ages at the positions of the plurality of the persons satisfy the air quality standard, as a control pattern to be set to the air-conditioning apparatus and the ventilation apparatus.

8. The air-conditioning system of claim 7, wherein

the determination unit is configured to, when there is no control pattern in which the local comfort level indexes of the plurality of the persons satisfy the comfort level standard, in the plurality of the control patterns, extract, from among the plurality of the control patterns, a control pattern in which the air ages at the positions of the plurality of the persons satisfy the air quality standard, and
the comfort level calculation unit is configured to calculate, for each extracted control pattern, a comfort efficiency indicating a comprehensive comfort level for the plurality of the persons by referring to the thermal environment distribution information corresponding to the control pattern extracted by the determination unit and using the local comfort level indexes of the plurality of the persons, and determine a control pattern in which the calculated comfort efficiency has a maximum as a control pattern to be set to the air-conditioning apparatus and the ventilation apparatus.

9. The air-conditioning system of claim 8, wherein

the thermal environment distribution information includes information of a temperature distribution, a humidity distribution, an airflow speed distribution, and a radiant heat distribution in the air-conditioning target space, and the comfort level calculation unit is configured to calculate the comfort efficiency for each extracted control pattern by using equation:

$$\zeta = (1 - 2|IPMV_1|) \times (1 - 2|IPMV_2|) \times \cdots \times (1 - 2|IPMV_k|) \times \cdots (1 - 2|IPMV_K|) \times 100\%$$

wherein k represents an identification number different for each of the plurality of the persons, $IPMV_k$ represents the local comfort level index of the person having the identification number k, k represents an integer of 2 or greater, and $\zeta$ represents the comfort efficiency.

10. The air-conditioning system of claim 8 or 9, wherein
the determination unit is configured to store a plurality of load data items, each being a combination of an input condition including a heat load of the air-conditioning target space and the control pattern having a maximum comfort efficiency, in chronological order in the storage unit and narrow down, from among the extracted control patterns, control patterns for which the comfort level calculation unit calculates comfort efficiencies, based on the plurality of the load data items stored in chronological order.

11. The air-conditioning system of claim 5, further comprising:

a target setting unit configured to set a target value for the air age at the position of the person detected by the detection unit and a target value for the local comfort level index of the person;
an evaluation unit configured to compare sensitivities of a plurality of control parameters included in the air-sending patterns of the air-conditioning apparatus and the ventilation apparatus and extract a control parameter having a relatively high sensitivity, the sensitivities each indicating how much effect the corresponding control parameter has on bringing the air age or the local comfort level index close to the target value; and
an input change unit configured to change a setting condition for the control parameter extracted by the evaluation unit,
wherein the fluid analyzing unit is configured to, when receiving information of the environment state detected by the detection unit and information of the position and the activity state of the person detected by the detection unit, calculate the thermal environment distribution information and the air age distribution information by performing a fluid analysis for a control pattern that is being executed and corresponds to the operation state of each of the air-conditioning apparatus and the ventilation apparatus, by using a fluid analysis model pre-determined for each control pattern, update, for the control pattern being executed, a setting condition of the control parameter extracted by the evaluation unit to the setting condition changed by the input change unit, and calculate the thermal environment distribution information and the air age distribution information for the updated control pattern.

12. An information processing device to be connected to an air-conditioning apparatus configured to condition air in an air-conditioning target space, a ventilation apparatus configured to supply outside air to the air-conditioning target space, and a detection unit configured to detect an environment state including a temperature of air in the air-conditioning target space and a position and an activity state of a person present in the air-conditioning target space, comprising:

a storage unit configured to store a plurality of control patterns, the control patterns each being a combination of a plurality of air-sending patterns of air blown out to the air-conditioning target space by the air-conditioning apparatus and a plurality of air-sending patterns of the outside air supplied to the air-conditioning target space by the ventilation apparatus; and
a controller configured to calculate, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus, and information of the environment state detected by the detection unit, calculate, for each of the thermal environment distribution information, a local comfort level index indicating a comfort level of the person from the position and the activity state of the person detected by the detection unit, and determine, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

13. A method for controlling an air-conditioning device by an information processing device to be connected to an air-conditioning apparatus configured to condition air in an air-conditioning target space, a ventilation apparatus configured to supply outside air to the air-conditioning target space, and a detection unit configured to detect an environment state including a temperature of air in the air-conditioning target space and a position and an activity state of a person present in the air-conditioning target space, the method comprising:

storing a plurality of control patterns, the control patterns each being a combination of a plurality of air-sending patterns of air blown out to the air-conditioning target space by the air-conditioning apparatus and a plurality of air-sending patterns of the outside air supplied to the air-conditioning target space by the ventilation apparatus;
calculating, for each of the control patterns, thermal environment distribution information in the air-conditioning target space and air age distribution information which is a distribution of air age that serves as an index indicating freshness of air, by using information of operation state of each of the air-conditioning apparatus and the ventilation apparatus and information of the environment state detected by the detection unit;
calculating, for each of the thermal environment distribution information, a local comfort level index indicating a comfort level of the person from the position and the activity state of the person detected by the detection unit; and
determining, from among the plurality of the control patterns, a control pattern in which the local comfort level index satisfies a pre-determined comfort level standard and the air age at the position of the person satisfies a pre-determined air quality standard, as a control pattern to be set to the air-conditioning apparatus and the ventilation apparatus.

FIG. 1

FIG. 2

FIG. 3

FIG. 4

FIG. 5

FIG. 6

FIG. 7

FIG. 8

FIG. 9

FIG. 10

FIG. 11

66 ROOM TEMPERATURE SENSOR

67 HUMIDITY SENSOR

68 TEMPERATURE SENSOR

69 INFRARED SENSOR

2 INFORMATION PROCESSING DEVICE

30

31 REFRIGERATION CYCLE CONTROLLER

32 COMMUNICATION UNIT

33 AIR-SENDING CONTROL UNIT

51 COMPRESSOR

55 FOUR-WAY VALVE

53 EXPANSION VALVE

54 OUTDOOR FAN

62 INDOOR FAN

63 AIRFLOW DIRECTION ADJUSTING UNIT

FIG. 12

PROCESSING CIRCUIT 90

FIG. 13

91 PROCESSOR

STORAGE UNIT 92

93

FIG. 14

4

40

44 AIR-SENDING CONTROL UNIT

41 FAN

42 AIRFLOW DIRECTION ADJUSTING UNIT

43 COMMUNICATION UNIT

2 INFORMATION PROCESSING DEVICE

FIG. 15

FIG. 16

| CONTROL PATTERN | AIR-CONDITIONING APPARATUS | | | VENTILATION APPARATUS | |
|---|---|---|---|---|---|
| | AF | AD | TA | VF | VD |
| CP1 | AF1 | AD1 | TA1 | VF1 | VD1 |
| CP2 | AF2 | AD1 | TA1 | VF1 | VD1 |
| CP3 | AF3 | AD1 | TA1 | VF1 | VD1 |
| CP4 | AF1 | AD2 | TA1 | VF1 | VD1 |
| CP5 | AF1 | AD3 | TA1 | VF1 | VD1 |
| CP6 | AF1 | AD1 | TA2 | VF1 | VD1 |
| ⋮ | ⋮ | ⋮ | ⋮ | ⋮ | ⋮ |
| CP243 | AF3 | AD3 | TA3 | VF3 | VD3 |

FIG. 17

| CONTROL PATTERN | BOUNDARY CONDITION |
|---|---|
| CP1 | BC1 |
| CP2 | BC2 |
| CP3 | BC3 |
| CP4 | BC4 |
| CP5 | BC5 |
| ⋮ | ⋮ |
| CP243 | BC243 |

FIG. 18

FIG. 19

# FIG. 20

| ACTIVITIES | W/m$^2$ | MET |
|---|---|---|
| RESTING | | |
|    SLEEPING | 40 | 0.7 |
|    RECLINING | 45 | 0.8 |
|    SEATED, QUIET | 60 | 1.0 |
|    STANDING, RELAXED | 70 | 1.2 |
| WALKING (ON LEVEL SURFACE) | | |
|    3.2km/h(0.9ms$^{-1}$) | 115 | 2.0 |
|    4.3km/h(1.2ms$^{-1}$) | 150 | 2.6 |
|    6.4km/h(1.8ms$^{-1}$) | 220 | 3.8 |
| OFFICE ACTIVITIES | | |
|    READING, SEATED | 55 | 1.0 |
|    WRITING | 60 | 1.0 |
|    TYPING | 65 | 1.1 |
|    FILING, SEATED | 70 | 1.2 |
|    FILING, STANDING | 80 | 1.4 |
|    WALKING ABOUT | 100 | 1.7 |
|    LIFTING/PACKING | 120 | 2.1 |
| DRIVING/FLYING | | |
|    CAR | 60 - 115 | 1.0 – 2.0 |
|    AIRCRAFT, ROUTINE | 70 | 1.2 |
|    AIRCRAFT, INSTRUMENT LANDING | 105 | 1.8 |
|    AIRCRAFT, COMBAT | 140 | 2.4 |
|    HEAVY VEHICLE | 185 | 3.2 |
| MISCELLANEOUS OCCUPATIONAL ACTIVITIES | | |
|    COOKING | 95 - 115 | 1.6 – 2.0 |
|    HOUSECLEANING | 115 - 200 | 2.0 – 3.4 |
|    SEATED, HEAVY LIMB MOVEMENT | 130 | 2.2 |
|    MACHINE WORK | | |
|      SAWING (TABLE SAW) | 105 | 1.8 |
|      LIGHT (ELECTRICAL INDUSTRY) | 115 - 140 | 2.0 – 2.4 |
|      HEAVY | 235 | 4.0 |
|    HANDLING 50 KG BAG | 235 | 4.0 |
|    PICK AND SHOVEL WORK | 235 - 280 | 4.0 – 4.8 |

FIG. 21

FIG. 22

| PERSON PRESENT IN ROOM | ACTIVITY AMOUNT | POSITION COORDINATES | |
|---|---|---|---|
| | | X-COOR-DINATE | Y-COOR-DINATE |
| MA | 1MET | 2 | 3 |
| MB | 1MET | 5 | 7 |
| MC | 2MET | 8 | 5 |

FIG. 23

# FIG. 24

STEP S105

POSITION AND ACTIVITY AMOUNT OF PERSON [k, (x, y), MET] (k = 1 TO m) (e.g., m = 3)

ENVIRONMENT STATE [Tr, Hr]

OPERATION STATE CPc (e.g., [AF3, AD1, Ta, VA1, VD1] WHEN CPc = CP3)

j = 1

STEP S107

FLUID ANALYSIS

BCj

AIR AGE DISTRIBUTION

THERMAL ENVIRONMENT DISTRIBUTION

STEP S109

AOA1    AOA2    AOA3

AIR AGE DISTRIBUTION

IPMV2    1MET    2MET

IPMV1    IPMV DISTRIBUTION    IPMV3

STEP S111, S112

k = 1 TO 3

$AOAk \geq Rfa$

$| IPMVk | < Rfcm$

NO

STEP S106

j = j + 1

HOWEVER, jmax = n

YES

STEP S117

DETERMINE CONTROL PATTERN CPj
CORRESPONDING TO BOUNDARY CONDITION BCj

# FIG. 25

```
                           ( START )
        (FL4) ──────────────────→│
                                 ▼
              ┌──────────────────────────────┐
              │  OBTAIN INFORMATION OF        │ ~ S101
              │  ENVIRONMENT STATE IN ROOM    │
              └──────────────────────────────┘
                                 ▼
              ┌──────────────────────────────┐
              │  OBTAIN INFORMATION OF        │
              │  OPERATION STATES OF AIR-     │ ~ S102
              │  CONDITIONING APPARATUS AND   │
              │  VENTILATION APPARATUS        │
              └──────────────────────────────┘
                                 ▼
              ┌──────────────────────────────┐
              │  OBTAIN INFORMATION OF        │ ~ S103
              │  POSITION OF EACH PERSON      │
              │  PRESENT IN ROOM             │
              └──────────────────────────────┘
                                 ▼
              ┌──────────────────────────────┐
              │  OBTAIN INFORMATION OF ACTIVITY│ ~ S104
              │  AMOUNT OF EACH PERSON        │
              │  PRESENT IN ROOM             │
              └──────────────────────────────┘
                                 ▼
              ┌──────────────────────────────┐
              │  SET DATA FOR ANALYSIS        │ ~ S105
              └──────────────────────────────┘
        (FL2) ──────────────────→│
                                 ▼           S106
                          ╱─────────────╲
                         ╱   CHECK        ╲   YES
                         ╲ ALL BOUNDARY   ╱──────────────────┐
                         ╱ CONDITIONS?    ╲                  │
                          ╲─────────────╱                   │
                              │ NO   S107                    │ S114
                              ▼                              ▼
              ┌──────────────────────────┐   ┌──────────────────────────────┐
              │  CFD FLUID ANALYSIS      │   │ EXTRACT BOUNDARY CONDITION IN │
              └──────────────────────────┘   │ WHICH AIR AGE OF EACH PERSON  │
                              │   S108        │ PRESENT IN ROOM SATISFIES     │
                              ▼               │ STANDARD                      │
              ┌──────────────────────────┐   └──────────────────────────────┘
              │ STORE IPMV DISTRIBUTION AND│                 │ S115
              │ AIR AGE DISTRIBUTION IN   │                 ▼
              │ STORAGE DEVICE            │   ┌──────────────────────────────┐
              └──────────────────────────┘   │ CALCULATE COMFORT EFFICIENCY  │
                              │   S109        │ BY RELAXING STANDARD FOR IPMV │
                              ▼               └──────────────────────────────┘
              ┌──────────────────────────┐                 │ S116
              │ EXTRACT IPMV AND AIR AGE  │                 ▼
              │ CORRESPONDING TO POSITION OF│  ┌──────────────────────────────┐
              │ EACH PERSON PRESENT IN ROOM│  │ SELECT BOUNDARY CONDITION IN  │
              └──────────────────────────┘   │ WHICH COMFORT EFFICIENCY      │
                              │               │ BECOMES MAXIMUM               │
                              ▼               └──────────────────────────────┘
                           ( FL1 )                          │
                                                            ▼
                                                         ( FL3 )
```

## FIG. 26

FL1

S110
STORE IPMV AND AIR AGE OF EACH
PERSON PRESENT IN ROOM

S111
DOES
IPMV OF EACH PERSON
PRESENT IN ROOM SATISFY
STANDARD?

NO

YES

S112
DOES AIR
AGE OF EACH PERSON
PRESENT IN ROOM SATISFY
STANDARD?

NO

YES

FL2

S113
SELECT BOUNDARY CONDITION IN WHICH
BOTH IPMV AND AIR AGE OF EACH PERSON
PRESENT IN ROOM SATISFY STANDARDS

FL3

S117
DETERMINE CONTROL PATTERN
CORRESPONDING TO SELECTED
BOUNDARY CONDITION

S118
TRANSMIT DETERMINED CONTROL PATTERN
TO AIR-CONDITIONING APPARATUS
AND VENTILATION APPARATUS

S119
HAS FIXED TIME ELAPSED?

NO

YES

FL4

FIG. 27

| BOUNDARY CONDITION | MA(ps1) | | MB(ps2) | | MC(ps3) | |
|---|---|---|---|---|---|---|
| | IPMV | AOA | IPMV | AOA | IPMV | AOA |
| BC1 | × | ○ | ○ | × | ○ | × |
| BC2 | ○ | ○ | ○ | × | ○ | × |
| BC3 | × | × | ○ | ○ | ○ | × |
| BC4 | ○ | × | × | × | ○ | ○ |
| BC5 | × | ○ | × | ○ | ○ | ○ |
| BC6 | × | ○ | ○ | × | ○ | × |
| ⋮ | ⋮ | ⋮ | ⋮ | ⋮ | ⋮ | ⋮ |
| BC106 | ○ | ○ | ○ | ○ | ○ | ○ |

## FIG. 28

| BOUNDARY CONDITION | MA(ps1) | | MB(ps2) | | MC(ps3) | | $\zeta_{0.5}$ | $\zeta_1$ | ... | $\zeta_3$ |
|---|---|---|---|---|---|---|---|---|---|---|
| | IPMV | AOA | IPMV | AOA | IPMV | AOA | | | | |
| BC1 | × | O | O | × | O | × | | | | |
| BC2 | × | O | × | O | O | O | 0% | 0% | ... | 31.6% |
| BC3 | × | × | O | O | O | × | | | | |
| BC4 | O | × | × | × | O | O | | | | |
| BC5 | × | O | × | O | × | O | 0% | 0% | ... | 92.5% |
| BC6 | O | O | O | × | O | × | | | | |
| ⋮ | ⋮ | ⋮ | ⋮ | ⋮ | ⋮ | ⋮ | | | | |
| BC101 | × | O | × | O | O | O | 0% | 0% | ... | 0.5% |
| ⋮ | ⋮ | ⋮ | ⋮ | ⋮ | ⋮ | ⋮ | | | | |
| BC199 | × | O | × | O | O | O | 0% | 0% | ... | 11.8% |
| ⋮ | ⋮ | ⋮ | ⋮ | ⋮ | ⋮ | ⋮ | | | | |
| BC243 | O | O | × | O | O | O | 0% | 0% | ... | 4.2% |

EP 4 417 888 A1

FIG. 29

FIG. 30

# FIG. 31

# FIG. 32

START

OBTAIN INFORMATION OF ENVIRONMENT STATE AND OPERATION STATE — S201

CFD FLUID ANALYSIS — S202

DETERMINE POSITION AND ACTIVITY AMOUNT OF EACH PERSON PRESENT IN ROOM — S203

SET TARGET VALUE FOR IPMV AND AIR AGE OF EACH PERSON PRESENT IN ROOM — S204

INVERSE ANALYSIS — S205

SET EACH CONTROL PARAMETER — S206

DETERMINE CONTROL PATTERN — S207

END

FIG. 33

```
┌──────────────────┐     ┌──────────────┐     ┌────────────────────┐
│   SET INPUT      │     │              │     │ CALCULATE THERMAL  │
│  CONDITION OF    │ ──> │  CFD FLUID   │ ──> │   ENVIRONMENT      │
│ CFD FLUID ANALYSIS│     │   ANALYSIS   │     │   DISTRIBUTION     │
│                  │     │              │     │   AND AIR AGE      │
│                  │     │              │     │   DISTRIBUTION     │
└──────────────────┘     └──────────────┘     └────────────────────┘
        ▲                                                │
        │                                                ▼
┌──────────────────┐                        ┌────────────────────┐
│  CHANGE INPUT    │                        │     EVALUATE       │
│   CONDITION      │ <───────────────────── │  IPMV AND AIR AGE  │
└──────────────────┘                        └────────────────────┘
```

FIG. 34

| POSITION OF PERSON | TARGET VALUE | AIR-CONDITIONING APPARATUS | | VENTILATION APPARATUS | |
|---|---|---|---|---|---|
| | | CONTROL PARAMETER | SENSI-TIVITY | CONTROL PARAMETER | SENSI-TIVITY |
| POSITION 1 | IPMV=0 OAO=125s | AF | 60% | VF | 70% |
| | | AD | 20% | VD | 20% |
| | | TA | 10% | | |
| POSITION 2 | IPMV=0.5 OAO=125s | AF | 10% | VF | 60% |
| | | AD | 85% | VD | 40% |
| | | TA | 25% | | |
| POSITION 3 | IPMV=0 OAO=85s | AF | 18% | VF | 30% |
| | | AD | 15% | VD | 90% |
| | | TA | 10% | | |
| ⋮ | ⋮ | ⋮ | ⋮ | ⋮ | ⋮ |

41

FIG. 35

## INTERNATIONAL SEARCH REPORT

| International application No. |
|---|
| **PCT/JP2021/037576** |

**A. CLASSIFICATION OF SUBJECT MATTER**

*F24F 11/62*(2018.01)i
FI:  F24F11/62

According to International Patent Classification (IPC) or to both national classification and IPC

**B. FIELDS SEARCHED**

Minimum documentation searched (classification system followed by classification symbols)

F24F11/62

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | WO 2019/235109 A1 (MITSUBISHI ELECTRIC CORP.) 12 December 2019 (2019-12-12) paragraphs [0011]-[0097] | 1-13 |
| A | JP 6927449 B1 (DAIKIN INDUSTRIES, LTD.) 01 September 2021 (2021-09-01) paragraphs [0022]-[0135] | 1-13 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **22 October 2021** | **30 November 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2021/037576**

| Patent document cited in search report | | | Publication date (day/month/year) | Patent family member(s) | Publication date (day/month/year) |
|---|---|---|---|---|---|
| WO | 2019/235109 | A1 | 12 December 2019 | (Family: none) | |
| JP | 6927449 | B1 | 01 September 2021 | (Family: none) | |

Form PCT/ISA/210 (patent family annex) (January 2015)

**EP 4 417 888 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4151780 B